# EUROPÄISCHE PATENTSCHRIFT

(11) **EP 2 666 254 B1**
(45) Veröffentlichungstag und Bekanntmachung des Hinweises auf die Patenterteilung: **15.11.2017**
(21) Anmeldenummer: 12700355.6
(22) Anmeldetag: 18.01.2012
(51) Int. Cl.: H04L 9/06, H04L 9/28

(54) **AUTHENTIFIZIERUNG VON VERSCHLÜSSELTEN DATENBLÖCKEN**
AUTHENTICATION OF ENCRYPTED DATA BLOCKS
AUTHENTIFICATION DE BLOCS DE DONNÉES CHIFFRÉES

(30) Priorität: 20.01.2011 DE 102011009008
(43) Veröffentlichungstag der Anmeldung: 27.11.2013
(73) Patentinhaber: Rohde & Schwarz GmbH & Co. KG, 81671 München (DE)
(72) Erfinder: MUELLER, Thorsten, 85716 Unterschleißheim (DE); EICHLER, Stephan, 81375 München (DE)
(74) Vertreter: Körfer, Thomas
(86) Internationale Anmeldenummer: PCT/EP2012/050671
(87) Internationale Veröffentlichungsnummer: WO 2012/098135

(56) Entgegenhaltungen:
- GB-A- 2 442 546
- US-A1- 2004 039 908
- HAWKWES P ET AL: "A Mode of Operation with Partial Encryption and Message Integrity (PEMI)", INTERNET CITATION, Juni 2002 (2002-06), Seiten 1-8, XP002577089, Gefunden im Internet: URL:http://eprints.kfupm.edu.sa/19106/ [gefunden am 2010-04-09]

## Beschreibung

Die Erfindung betrifft eine Authentifizierungs-Verschlüsselungseinheit und eine Authentifizierungs-Entschlüsselungseinheit sowie ein Verfahren hierfür.

Von großer Bedeutung ist der verschlüsselte Datenaustausch über ein gemeinsames Medium, wie dem Internet, ohne Unbefugten Einsicht in die zu übertragenden Daten gewähren zu müssen (Schutz der Vertraulichkeit). Neben einer ausreichend hohen Verschlüsslung ist es ebenfalls von Bedeutung, dass die Integrität der übertragenen Daten sichergestellt ist, um zu gewährleisten, dass die übertragenen Daten auf dem Transportweg nicht verändert wurden. Ein solcher Integritätsschutz wird beispielsweise dadurch erreicht, dass eine Prüfsumme über die gesendeten verschlüsselten Daten gebildet wird und ebenfalls mit versendet wird.

Aus der DE 10 2008 013 785 A1 sind eine Vorrichtung und ein Verfahren bekannt, mit denen ein Datenstrom in einzelne Blöcke aufgeteilt wird, wobei die einzelnen Blöcke verschlüsselt werden und wobei über die einzelnen verschlüsselten Datenblöcke eine gemeinsame Prüfsumme berechnet wird. Hierzu wird ein Verfahren genutzt, welches unter dem Namen "Galois Counter Mode" (dt. Galois Zählermodus) bekannt ist und unter dem Titel "Galois/Counter Mode of Operation" bei dem National Institute of Standards and Technology (NIST; dt. nationales Institut für Standardisierung und Technik) veröffentlicht ist.

Nachteilig an der DE 10 2008 013 785 A1 ist, dass es nicht möglich ist, dass einzelne verschlüsselte Datenblöcke oder einzelne Bits innerhalb der einzelnen verschlüsselten Datenblöcke von der Bildung einer Prüfsumme ausgenommen werden können. Dies ist allerdings gerade bei Echtzeitanwendungen, wie zum Beispiel Sprachübertragungen, Bildübertragungen oder Videoübertragungen wünschenswert. Für den Fall, dass bei der Übertragung von verschlüsselten Sprach-, Bild- oder Videodaten ein Übertragungsfehler auftritt und beispielsweise ein Bit falsch übertragen wird, so macht sich dieser Fehler bei Fehlen einer Prüfsumme nur marginal oder überhaupt nicht bemerkbar. Für den Fall, dass über die verschlüsselten Datenblöcke eine Prüfsumme berechnet wird, wird bei einer fehlerhaften Übertragung eines Bits das ganze Paket verworfen, was gerade bei den oben genannten Echtzeitanwendungen erhebliche Nachteile mit sich bringt und sich sehr störend auswirkt. Die "Quality of Experience" (dt. Erlebnisqualität) des Nutzers wird reduziert. Weitere Ansätze aus der Stand der Technik sind im Dokument US 2004/0039908 A1 beschrieben.

Es ist daher die Aufgabe der Erfindung, eine Authentifizierungs-Verschlüsselungseinheit und eine Authentifizierungs-Entschlüsselungseinheit sowie ein Verfahren hierfür zu schaffen, mit denen es möglich ist, dass verschlüsselte Datenblöcke bzw. einzelne Bits innerhalb der verschlüsselten Datenblöcke von der Bildung einer Prüfsumme ausgenommen werden können, wobei gleichzeitig eine hohe Ausführungsgeschwindigkeit und Effizienz sichergestellt sein muss.

Die Aufgabe wird bezüglich der Authentifizierungs-Verschlüsselungseinheit durch die Merkmale des Anspruchs 1 und der Authentifizierungs-Entschlüsselungseinheit durch die Merkmale des Anspruchs 11 gelöst. Weiterhin wird die Aufgabe bezüglich des Verfahrens für die Authentifizierungs-Verschlüsselungseinheit durch die Merkmale des Anspruchs 13 und bezüglich des Verfahrens für die Authentifizierungs-Entschlüsselungseinheit durch die Merkmale des Anspruchs 23 gelöst. Der Anspruch 25 beinhaltet ein Computerprogramm mit Programmcode-Mitteln, um sämtliche Verfahrensschritte ausführen zu können, wenn das Programm auf einem Computer oder einem digitalen Signalprozessor oder sonstigen elektronischen Recheneinheiten ausgeführt wird. Der Anspruch 26 enthält ein Computerprogramm-Produkt mit insbesondere auf einem maschinenlesbaren Träger gespeicherten Programmcode-Mitteln, um alle Verfahrensschritte durchführen zu können, wenn das Programm auf einem Computer oder einem digitalen Signalprozessor oder sonstigen elektronischen Recheneinheiten ausgeführt wird. In den jeweiligen Unteransprüchen sind vorteilhafte Weiterbildungen der erfindungsgemäßen Vorrichtung sowie des erfindungsgemäßen Verfahrens angegeben.

Die erfindungsgemäße Authentifizierungs-Verschlüsselungseinheit weist zumindest eine Verschlüsselungsstufe auf. Jede Verschlüsselungsstufe verschlüsselt einen Klardatenblock und generiert dabei einen Chiffrierdatenblock, wobei über jeden Chiffrierdatenblock eine gemeinsame Prüfsumme berechnet ist. Über eine Auswahleinheit innerhalb jeder Verschlüsselungsstufe ist auswählbar, welche Datenbits innerhalb jedes Chiffrierdatenblocks für die Berechnung der gemeinsamen Prüfsumme zu verwenden sind.

Die erfindungsgemäße Authentifizierungs-Entschlüsselungseinheit weist ebenfalls zumindest eine Entschlüsselungsstufe auf. Jede Entschlüsselungsstufe entschlüsselt einen Chiffrierdatenblock und generiert dabei einen Klardatenblock, wobei über jeden Chiffrierdatenblock eine gemeinsame Prüfsumme berechnet ist. Über eine Auswahleinheit innerhalb jeder Entschlüsselungsstufe ist auswählbar, welche Datenbits innerhalb jedes Chiffrierdatenblocks für die Berechnung der gemeinsamen Prüfsumme zu verwenden sind.

Besonders vorteilhaft an der erfindungsgemäßen Authentifizierungs-Verschlüsselungseinheit und an der erfindungsgemäßen Authentifizierungs-Entschlüsselungseinheit ist, dass Datenbits innerhalb jedes Chiffrierdatenblocks ausgewählt werden können, die anschließend für eine Berechnung der gemeinsamen Prüfsumme zu verwenden sind. Dadurch ist es möglich, dass einzig Steuerdaten innerhalb der Chiffrierdatenblöcke für die Berechnung einer Prüfsumme verwendet werden und über die Nutzdaten, die z.B. Sprach-, Bild-, oder Videodaten beinhalten, selbst keine Prüfsumme gebildet wird.

Das erfindungsgemäße Verfahren für eine Authentifizierungs-Verschlüsselungseinheit, die zumindest eine Verschlüsselungsstufe aufweist, umfasst mehrere Verfahrensschritte. In einem ersten Verfahrensschritt wird ein Klardatenblock innerhalb jeder Verschlüsselungsstufe verschlüsselt, so dass daraus ein Chiffrierdatenblock generiert wird. In einem weiteren Verfahrensschritt wird durch eine Auswahleinheit innerhalb jeder Verschlüsselungsstufe ausgewählt, welche Datenbits innerhalb jedes Chiffrierdatenblocks für die Berechnung der gemeinsamen Prüfsumme verwendet werden, so dass anschließend eine gemeinsame Prüfsumme über jeden Chiffrierdatenblock berechnet wird.

Das erfindungsgemäße Verfahren für eine Authentifizierungs-Entschlüsselungseinheit, die zumindest eine Entschlüsselungsstufe aufweist, umfasst die nachfolgenden Verfahrensschritte. In einem ersten Verfahrensschritt wird ein Chiffrierdatenblock innerhalb jeder Entschlüsselungsstufe entschlüsselt, so dass daraus ein Klardatenblock generiert wird. In einem weiteren Verfahrensschritt wird durch eine Auswahleinheit innerhalb jeder Entschlüsselungsstufe ausgewählt, welche Datenbits innerhalb jedes Chiffrierdatenblocks für die Berechnung der gemeinsamen Prüfsumme verwendet werden, so dass anschließend die gemeinsame Prüfsumme über jeden Chiffrierdatenblock berechnet wird.

Es ist besonders vorteilhaft, dass in dem Verfahren für die Authentifizierungs-Verschlüsselungseinheit und in dem Verfahren für die Authentifizierungs-Entschlüsselungseinheit über eine Auswahleinheit innerhalb jeder Verschlüsselungsstufe oder Entschlüsselungsstufe ausgewählt werden kann, welche Datenbits innerhalb jedes Chiffrierdatenblocks für die Berechnung der gemeinsamen Prüfsumme verwendet werden soll. Dadurch kann sichergestellt werden, dass zum Beispiel Nutzdaten im Gegensatz zu Steuerdaten von der Bildung einer gemeinsamen Prüfsumme ausgenommen werden können. Im weiteren Dokument bezeichnen Steuerdaten die Headerinformationen (Kopfdaten), die für die Übertragung der Nutzdaten in den verschiedenen Übertragungsprotokollen verwendet werden - unabhängig davon, ob diese Informationen zusammen mit den Nutzdaten in einem Paket übertragen werden, oder separat in einem eigenen Kanal.

Ein weiterer Vorteil der erfindungsgemäßen Authentifizierungs-Verschlüsselungseinheit oder der erfindungsgemäßen Authentifizierungs-Entschlüsselungseinheit besteht, wenn die Auswahleinheit innerhalb jeder Verschlüsselungsstufe oder Entschlüsselungsstufe eine frei wählbare Bitmaske über ein logisches UND mit dem Chiffrierdatenblock der Verschlüsselungsstufe oder Entschlüsselungsstufe verknüpft. Eine solche freiwählbare Bitmaske und Verknüpfung mit einem logischen UND lässt sich sehr einfach auf einem programmierbaren Logikbaustein, wie zum Beispiel einen FPGA (engl. field programmable gate array; dt. feldprogrammierbare Logikgatteranordnung), realisieren.

Ein weiterer Vorteil der erfindungsgemäßen Authentifizierungs-Verschlüsselungseinheit oder der erfindungsgemäßen Authentifizierungs-Entschlüsselungseinheit besteht, wenn ein erster logischer Zustand an einer Stelle innerhalb der Bitmaske gesetzt ist, wenn das entsprechende Bit an derselben Stelle innerhalb des Chiffrierdatenblocks für die Berechnung der gemeinsamen Prüfsumme zu verwenden ist und/oder wenn ein zweiter logischer Zustand innerhalb der Bitmaske an einer Stelle gesetzt ist, wenn das entsprechende Bit an derselben Stelle innerhalb des Chiffrierdatenblocks für die Berechnung der gemeinsamen Prüfsumme nicht zu verwenden ist. Bei dem ersten logischen Zustand handelt es sich z.B. um eine logische Eins, wohingegen es sich bei dem zweiten logischen Zustand um eine logische Null handelt. Dadurch ist es möglich, dass Nutzdaten und Steuerdaten innerhalb eines Chiffrierdatenblocks gemeinsam verschlüsselt werden, weil gewährleistet ist, dass einzig die Steuerdaten für die Bildung einer gemeinsamen Prüfsumme herangezogen werden können, wodurch eine sehr effiziente Kodierung erreicht wird.

Zusätzlich besteht bei dem erfindungsgemäßen Verfahren für eine Authentifizierungs-Verschlüsselungseinheit oder eine Authentifizierungs-Entschlüsselungseinheit ein Vorteil, wenn die Authentifizierungs-Verschlüsselungseinheit oder die Authentifizierungs-Entschlüsselungseinheit in dem erfindungsgemäßen Verfahren nach dem Prinzip des Galois Counter Mode arbeitet, weil bei dem Galois Counter Mode bisher keine Sicherheitslücken nachgewiesen sind und dieser sehr schnell arbeitet und mit vertretbarem Aufwand sowohl in Software als auch in Hardware zu implementieren ist.

Weiterhin besteht ein Vorteil in dem erfindungsgemäßen Verfahren für eine Authentifizierungs-Verschlüsselungseinheit oder eine Authentifizierungs-Entschlüsselungseinheit, wenn die Bitmasken in der Auswahleinheit einer jeden Verschlüsselungsstufe beliebig und unabhängig voneinander eingestellt werden. Dies erlaubt, dass keine besonderen Voraussetzungen bezüglich der Anzahl und Anordnung der Nutzdaten und der Steuerdaten vorliegen müssen.

Schlussendlich besteht ein Vorteil in dem erfindungsgemäßen Verfahren für eine Authentifizierungs-Verschlüsselungseinheit oder eine Authentifizierungs-Entschlüsselungseinheit, wenn mehr Datenbits innerhalb des Chiffrierdatenblocks für die Berechnung der Prüfsumme durch die Auswahleinheit ausgewählt werden, wenn eine Übertragung der Chiffrierdatenblöcke wenige Übertragungsfehler aufweist und/oder wenn weniger Datenbits innerhalb des Chiffrierdatenblocks für die Berechnung der Prüfsumme durch die Auswahleinheit ausgewählt werden, wenn eine Übertragung der Chiffrierdatenblöcke mehr Übertragungsfehler aufweist. Dadurch ist sichergestellt, dass auf den zusätzlichen Integritätsschutz nur dann verzichtet wird, wenn es die Eigenschaften der Übertragungsstrecke nicht anders zulassen.

Innerhalb der Beschreibung werden die erfindungsgemäße Authentifizierungs-Verschlüsselungseinheit und die Authentifizierungs-Entschlüsselungseinheit einzig im Zusammenspiel mit dem Galois Counter Mode beschrieben. Allerdings lässt sich die hier vorliegende Erfindung prinzipiell auf alle Verschlüsselungsarten anwenden, in denen blockweise verschlüsselt und die Integrität geschützt werden soll.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: ein Ausführungsbeispiel, das einen Anwendungsfall für eine Recheneinheit beschreibt;
- Fig. 2A: ein Ausführungsbeispiel eines Datenpakets, wie es z.B. die mobilen Endgeräte versenden können;
- Fig. 2B: ein Ausführungsbeispiel, wie die Recheneinheit das Datenpaket von dem mobilen Endgerät weiterverarbeitet;
- Fig. 3: eine Übersicht über ein Ausführungsbeispiel der Recheneinheit mit der integrierten erfindungsgemäßen Authentifizierungs-Verschlüsselungseinheit und der integrierten erfindungsgemäßen Authentifizierungs-Entschlüsselungseinheit;
- Fig. 4A: ein Ausführungsbeispiel einer bisher intern benutzten Authentifizierungs-Verschlüsselungseinheit;
- Fig. 4B: ein Ausführungsbeispiel einer bisher intern benutzten Authentifizierungs-Entschlüsselungseinheit;
- Fig. 5A: ein Ausführungsbeispiel einer erfindungsgemäßen Authentifizierungs-Verschlüsselungseinheit;
- Fig. 5B: ein Ausführungsbeispiel einer erfindungsgemäßen Authentifizierungs-Entschlüsselungseinheit;
- Fig. 6: ein Flussdiagramm, welches ein Ausführungsbeispiel für das erfindungsgemäße Verfahren mit der Authentifizierungs-Verschlüsselungseinheit beschreibt;
- Fig. 7: ein weiteres Flussdiagramm, welches ein Ausführungsbeispiel für das erfindungsgemäße Verfahren mit der Authentifizierungs-Verschlüsselungseinheit oder der Authentifizierungs-Entschlüsselungseinheit beschreibt;
- Fig. 8: ein weiteres Flussdiagramm, welches ein Ausführungsbeispiel für das erfindungsgemäße Verfahren mit der Authentifizierungs-Verschlüsselungseinheit oder der Authentifizierungs-Entschlüsselungseinheit beschreibt;
- Fig. 9: ein weiteres Flussdiagramm, welches ein Ausführungsbeispiel für das erfindungsgemäße Verfahren mit der Authentifizierungs-Verschlüsselungseinheit oder der Authentifizierungs-Entschlüsselungseinheit beschreibt; und
- Fig. 10: ein weiteres Flussdiagramm, welches ein Ausführungsbeispiel für das erfindungsgemäße Verfahren mit der Authentifizierungs-Entschlüsselungseinheit beschreibt.

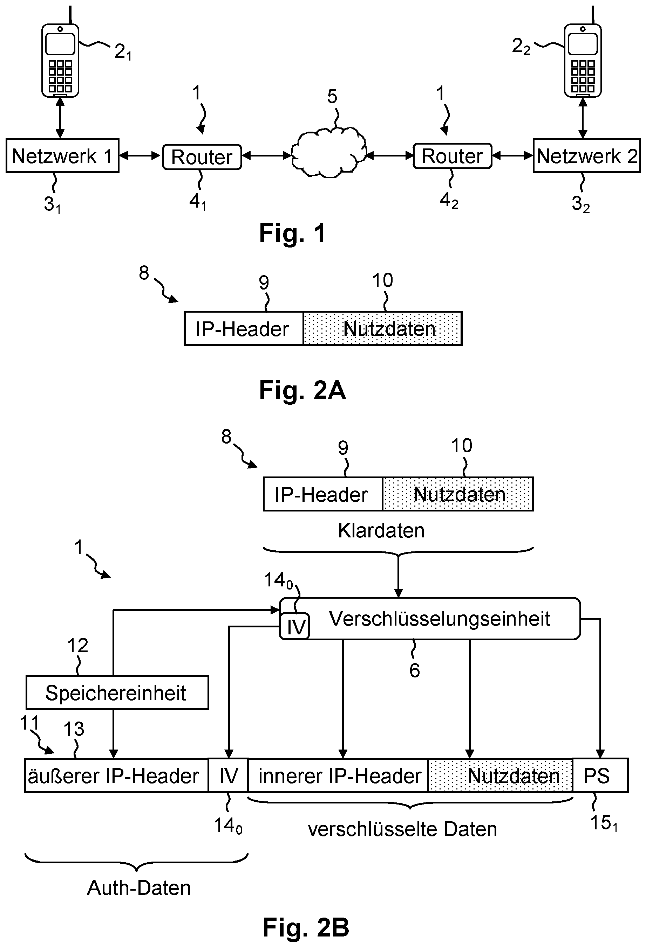

Fig. 1 beschreibt einen Anwendungsfall für die Recheneinheit 1 mit der integrierten erfindungsgemäßen Authentifizierungs-Verschlüsselungseinheit 6 und der integrierten erfindungsgemäßen Authentifizierungs-Entschlüsselungseinheit 7. Zwei mobile Endgeräte 2₁, 2₂, die in dem Ausführungsbeispiel aus Fig. 1 als Mobiltelefone dargestellt sind, tauschen beim Bestehen einer Sprachverbindung gegenseitig Datenpakete 8 aus. Bei den auszutauschenden Datenpaketen 8 handelt es sich in diesem Ausführungsbeispiel um IP-Datenpakete (engl. Internet Protocol; dt. Internet Protokoll). Die mobilen Endgeräte 2₁, 2₂ sind in diesem Ausführungsbeispiel mit dem Netzwerk 3₁ bzw. mit dem Netzwerk 3₂ verbunden. Das Netzwerk 3₁ ist mit dem Router 4₁ verbunden und das Netzwerk 3₂ ist mit dem Router 4₂ verbunden. Beide Router 4₁ und 4₂ sind über eine Funkübertragung 5 durch die Luft miteinander verbunden. Einer solchen Funkübertragung 5 können besonders häufig Störungen überlagert sein.

Dabei stellen beide Router 4₁ und 4₂ eine VPN-Verbindung (engl. virtual private network; dt. virtuelles privates Netzwerk) miteinander her. Dieses VPN-Netzwerk, welches beide Router 4₁ und 4₂ miteinander herstellen basiert z.B. auf IPSEC (engl. Internet protocol security; dt. Sicherheitsprotokoll für das Internet) und verbindet die Netzwerke 3₁ und 3₂ miteinander. Die erfindungsgemäße Recheneinheit 1 mit einer Authentifizierungs-Verschlüsselungseinheit 6 oder einer Authentifizierungs-Entschlüsselungseinheit 7 ist in dem Ausführungsbeispiel aus Fig. 1 bevorzugt in den Routern 4₁ und 4₂ ausgebildet, die dabei bevorzugt in den mobilen Endgeräten 2₁, 2₂ integriert sind. Die erfindungsgemäße Recheneinheit 1 kann auch in Routern 4₁ und 4₂ ausgebildet sein, die nicht innerhalb der mobilen Endgeräte 2₁, 2₂ realisiert sind und beispielsweise die beiden Netzwerke 3₁, 3₂ über das Internet miteinander verbinden.

Fig. 2A zeigt ein Ausführungsbeispiel eines Datenpakets 8, welches zwischen den mobilen Endgeräten 2₁ und 2₂ ausgetauscht wird. Bei dem Datenpaket 8 handelt es sich in diesem Ausführungsbeispiel um ein IP-Datenpaket. Das Datenpaket 8 weist einen Bereich auf, in dem sich ein IP-Header 9 (engl. IP-Header; dt. IP-Kopf) befindet, und einen Bereich, in dem sich die Nutzdaten 10 befinden. Für den Fall, dass das Datenpaket 8 aus Fig. 2A von dem mobilen Endgerät 2₁ zu dem mobilen Endgerät 2₂ übertragen wird, befindet sich in dem IP-Header 9 beispielsweise die Information über die Zieladresse in dem Netzwerk 3₂, die auch als Steuerdaten bezeichnet werden können.

Fig. 2B zeigt ein Ausführungsbeispiel der Recheneinheit 1 mit einer integrierten erfindungsgemäßen Authentifizierungs-Verschlüsselungseinheit 6. Die Recheneinheit 1 ist in dem Ausführungsbeispiel aus Fig. 2B in den Routern 4₁, bzw. 4₂ integriert. Für den Fall, dass das mobile Endgerät 2₁ ein Datenpaket 8 an das mobile Endgerät 2₂ sendet, wird das Datenpaket 8, welches einen Bereich mit einem IP-Header 9 und einen Bereich mit den Nutzdaten 10 umfasst, an die erfindungsgemäße Authentifizierungs-Verschlüsselungseinheit 6 übergeben. Die Recheneinheit 1 erzeugt im Folgenden ein neues IP-Datenpaket 11, welches über ein gemeinsames Medium, wie zum Beispiel das Internet 5 übertragen werden kann und in seinem Nutzdatenbereich das verschlüsselte Datenpaket 8 transportiert.

Hierzu liest die Recheneinheit 1 aus einer Speichereinheit 12 die öffentliche IP-Adresse des Routers 4₂, in welchem sich das Zielnetzwerk 3₂ befindet, aus. Diese IP-Adresse aus dem öffentlichen Adressraum wird als Zieladresse in einen äußeren IP-Header 13 eingetragen. Diese Zieladresse wird ebenfalls der Authentifizierungs-Verschlüsselungseinheit 6 mitgeteilt und innerhalb dieser, wie später noch ausführlich erläutert, bevorzugt als Authentifizierungsdaten 13 verwendet. Bevorzugt ist auch der Initialisierungsvektor 14₀ Bestandteil der Authentifizierungsdaten 13. Die Authentifizierungs-Verschlüsselungseinheit 6 erzeugt auch einen Startwert für einen Initialisierungsvektor 14₀. Dieser Startwert für den Initialisierungsvektor 14₀ wird in den Nutzdatenbereich des IP-Datenpakets 11 hinzugefügt und ist nicht verschlüsselt. Der IP-Header 9 und die Nutzdaten 10 aus dem Datenpaket 8 werden durch die Authentifizierungs-Verschlüsselungseinheit 6 verschlüsselt und in den Nutzdatenbereichs des IP-Datenpakets 11 übertragen. Weiterhin erzeugt die Authentifizierungs-Verschlüsselungseinheit 6 eine Prüfsumme 15₁, die ebenfalls in den Nutzdatenbereich des IP-Datenpakets 11 übertragen wird. Die Prüfsumme 15₁ kann, wie im Weiteren noch erläutert wird, aus den verschlüsselten Daten oder aus Teilen der verschlüsselten Daten berechnet werden.

Der Router 4₂ empfängt und entschlüsselt, wie im Weiteren noch ausführlich beschrieben wird, das IP-Datenpaket 11 und leitet den Inhalt, bestehend aus den verschlüsselten Nutzdaten, sowie den Startwert des Initialisierungsvektors 14₀ und die Prüfsumme 15₁ an eine Authentifizierungs-Entschlüsselungseinheit 7 weiter, die die verschlüsselten Daten entschlüsselt, so dass diese im Anschluss daran an das mobile Endgerät 2₂ weitergeleitet werden können.

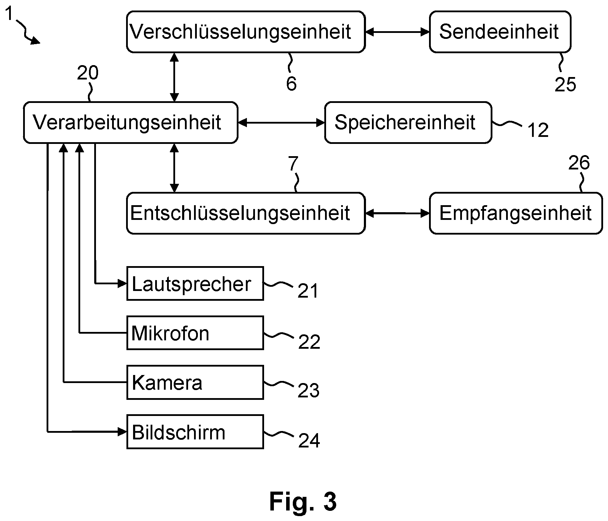

Fig. 3 zeigt ein Ausführungsbeispiel der Recheneinheit 1 mit der integrierten erfindungsgemäßen Authentifizierungs-Verschlüsselungseinheit 6 und der integrierten erfindungsgemäßen Authentifizierungs-Entschlüsselungseinheit 7. Der Kern der Recheneinheit 1 ist eine zentrale Datenverarbeitungseinheit 20. Bei dieser zentralen Datenverarbeitungseinheit 20 kann es sich beispielsweise um einen Signalprozessor oder um einen programmierbaren Logikbaustein handeln. Die zentrale Datenverarbeitungseinheit 20 ist sowohl mit der Authentifizierungs-Verschlüsselungseinheit 6, als auch mit der Authentifizierungs-Entschlüsselungseinheit 7 verbunden. An die zentrale Verarbeitungseinheit 20 ist ebenfalls noch die Speichereinheit 12 angeschlossen.

In dem erfindungsgemäßen Ausführungsbeispiel aus Fig. 3 sind an die zentrale Datenverarbeitungseinheit 20 zumindest ein Lautsprecher 21, zumindest ein Mikrofon 22, zumindest ein Kamerasystem 23 und zumindest eine Bildschirmeinheit 24 angeschlossen. Es müssen allerdings nicht alle vier Systeme 21, 22, 23, 24 an die zentrale Datenverarbeitungseinheit 20 angeschlossen sein, es können auch nur eines oder mehrere dieser Systeme 21, 22, 23, 24 mit der zentralen Datenverarbeitungseinheit 20 verbunden sein. Die zentrale Datenverarbeitungseinheit 20 nimmt einen Datenstrom von dem zumindest einen Mikrofon 22 oder dem zumindest einen Kamerasystem 23 entgegen und codiert diesen optional, bevor der Datenstrom an die Authentifizierungs-Verschlüsselungseinheit 6 weitergeleitet wird. Auf der anderen Seite nimmt die zentrale Datenverarbeitungseinheit einen Datenstrom von der Authentifizierungs-Entschlüsselungseinheit 7 entgegen und decodiert diesen optional, bevor er an den zumindest einen Lautsprecher 21 oder an die zumindest ein Bildschirmeinheit 24 weitergeleitet wird.

Die Authentifizierungs-Verschlüsselungseinheit 6 ist in dem Ausführungsbeispiel aus Fig. 3 mit der Sendeeinheit 25 verbunden. Die Authentifizierungs-Entschlüsselungseinheit 7 ist in dem Ausführungsbeispiel aus Fig. 3 mit der Empfangseinheit 26 verbunden. Gemäß dem Ausführungsbeispiel aus Fig. 1 kann es sich bei der Sendeeinheit 25 und der Empfangseinheit 26 um eine drahtgebundene (Daten-)Übertragungsstrecke, z.B. eine Netzwerkverbindung handeln. Es ist aber ebenfalls möglich, dass es sich bei der Sendeeinheit 25 und der Empfangseinheit 26 um eine Kommunikationseinheit handelt, die eine drahtlose Datenübertragung ermöglicht. In diesem Fall beinhaltet die Sendeeinheit 25 die notwendigen Aufbereitungs- und Verstärkerstufen, wobei die Empfangseinheit 26 die entsprechenden Mischeranordnungen zum Empfangen eines durch die Luft übertragenen Datenstroms in den dafür möglichen Frequenzbändern, wie z.B. HF (engl. high frequency; dt. Hochfrequenz), VHF (engl. very high frequency; dt. Ultrakurzwelle) oder UHF (engl. ultra high frequency; dt. Dezimeterwelle) und Vorrichtungen zum Digitalisieren des Basisbandsignals beinhaltet. Übertragungsfehler entstehen dann beispielsweise aufgrund eines schlechten Übertragungskanals.

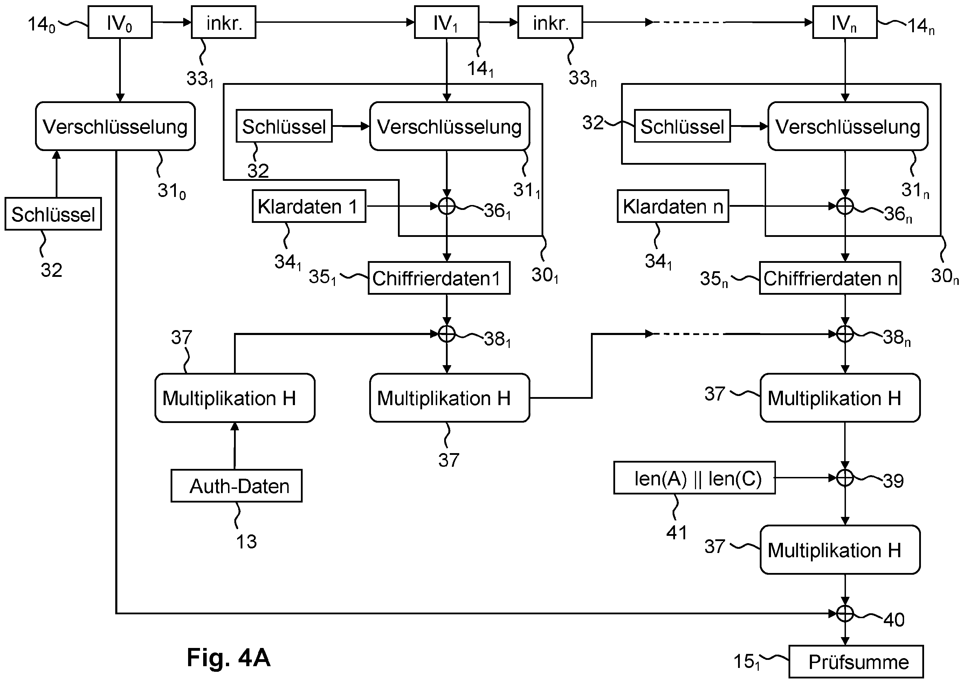

Fig. 4A zeigt ein bekanntes Ausführungsbeispiel, welches die Funktionsweise einer Authentifizierungs-Verschlüsselungseinheit beschreibt, die nach dem Prinzip des Galois Counter Mode arbeitet. Die bekannte Authentifizierungs-Verschlüsselungseinheit weist n Verschlüsselungsstufen 30₁ bis 30ₙ auf, mit n ≥ 1, wobei zur Funktionsweise der Authentifizierungs-Verschlüsselungseinheit zumindest eine Verschlüsselungsstufe 30₁ notwendig ist. Jede Verschlüsselungsstufe 30₁ bis 30ₙ weist dabei je eine Verschlüsselungseinheit 31₁ bis 31ₙ auf, wobei jeder Verschlüsselungseinheit 31₁ bis 31ₙ bevorzugt der gleiche Schlüssel 32 zugeführt wird. Dieser Schlüssel 32 ist beispielsweise in der Speichereinheit 12 gespeichert. Jede Verschlüsselungsstufe 30₁ bis 30ₙ weist weiterhin noch eine XOR-Verknüpfung 36₁ bis 36ₙ auf.

Ein Initialisierungsvektor 14₀, der einen Wert von 0 bis 2⁶⁴-1 aufweisen kann, wird durch je eine Inkrementiereinheit 33₁ bis 33ₙ vor jeder Verschlüsselungsstufe 30₁ bis 30ₙ um eins erhöht, so dass der Verschlüsselungsstufe 30₁ der durch die Inkrementiereinheit 33₁ um eins erhöhte Wert des Initialisierungsvektors 14₀ zugeführt wird. Dieser um eins erhöhte Wert des Initialisierungsvektors 14₀ wird bei der ersten Verschlüsselungsstufe 30₁ als Initialisierungsvektor 14₁ bezeichnet. Dadurch, dass der Initialisierungsvektor 14₀ für jede Verschlüsselungsstufe 31₁ bis 31ₙ um den Wert eins erhöht wird, gibt es insgesamt n+1 Initialisierungsvektoren 14₀, 14₁ bis 14ₙ. Der Initialisierungsvektor 14₀ ist auch in dem IP-Datenpaket 11 gespeichert und nicht verschlüsselt. Die Initialisierungsvektoren 14₁ bis 14ₙ werden durch die Verschlüsselungseinheiten 31₁ bis 31ₙ innerhalb der Verschlüsselungsstufen 30₁ bis 30ₙ mit dem Schlüssel 32 verschlüsselt. Der Inkrementierungsvektor 14₀ muss derart gewählt sein, dass sich der Wert auch nach n Inkrementierungseinheiten 33₁ bis 33ₙ nicht wiederholt. Die einzelnen Inkrementierungseinheiten 33₁ bis 33ₙ werden beispielsweise durch einen Zähler realisiert, welcher effizient in Hardware realisiert ist. Der Startwert dieses Zählers oder auch der Initialisierungsvektor 14₀ wird dabei zufällig gewählt, jedoch muss sichergestellt sein, dass der Zähler nicht überläuft. Als Verschlüsselungsalgorithmus kommt bevorzugt eine AES (engl. Advanced Encryption Standard; dt. fortgeschrittener Verschlüsselungsstandard) Verschlüsselung mit einer Blockgröße von 128 Bit und einer Schlüssellänge von 256 Bit in Betracht, wobei auch alle anderen Blockchiffren verwendbar sind. Eine solche AES-Verschlüsselung kann Blöcke mit jeweils 128 Bit verschlüsseln.

Innerhalb jeder Verschlüsselungsstufe 30₁ bis 33ₙ befindet sich eine XOR-Verknüpfung 36₁ bis 36ₙ, die jeweils mit der entsprechenden Verschlüsselungseinheit 31₁ bis 31ₙ verbunden ist. Ein zweiter Eingang dieser XOR-Verknüpfung 36₁ bis 36ₙ wird mit dem entsprechenden zu verschlüsselnden Klardatenblock 34₁ bis 34ₙ verknüpft. Dabei wird genau ein Klardatenblock 34₁ bis 34ₙ innerhalb genau einer Verschlüsselungsstufe 30₁ bis 30ₙ mit dem Ausgangswert genau einer Verschlüsselungseinheit 31₁ bis 31ₙ XOR-verknüpft. Die Initialisierungsvektoren 14₀ bis 14ₙ müssen bei einer AES-128 Bit Verschlüsselung eine Blockgröße von 128 Bit oder weniger aufweisen, wobei die Differenz zwischen der tatsächlichen Größe der Initialisierungsvektoren 14₀ bis 14ₙ und den 128 Bit aufgefüllt werden muss (engl. padding; dt. Auffüllung). Bevorzugt ist der Initialisierungsvektor 14₀ stets 128 Bit lang, sodass auf das Auffüllen verzichtet werden kann.

Die Verarbeitungseinheit 20 aus Fig. 3, die innerhalb der Recheneinheit 1 implementiert ist, zerteilt das Datenpaket 8 in 128 Bit große Blöcke. Je nach Größe des MTU-Werts (engl. Maximum Transmission Unit; dt. maximaler Übertragungswert) der je nach Übertragungsmedium (Ethernet, Gigabit-Ethernet, Fibre Channel, etc.) variiert, müssen derart viele Verschlüsselungsstufen 30₁ bis 30ₙ hintereinander realisiert sein, dass die durch den MTU-Wert angegebene maximale Datenpaketgröße auf entsprechend kleine, für die Verschlüsselungseinheiten 31₁ bis 31ₙ handhabbare Größen zerteilt wird. Eine typische MTU-Größe beträgt für Ethernet 1500 Byte, so dass das Datenpaket 8 maximal 1500 Bytes lang sein darf. Für den Fall, dass innerhalb der Verschlüsselungseinheiten 31₁ bis 31ₙ eine AES-256 Verschlüsselung Anwendung findet, müssen mindestens 1500 x 8 / 128 Verschlüsselungsstufen 30₁ bis 30ₙ realisiert sein, wobei das Ergebnis aufgerundet wird. Für den oben genannten Fall beträgt die Anzahl an Verschlüsselungsstufen bei Ethernet mit einem MTU-Wert von 1500 gerundet 94. Selbstverständlich ist auch der Einsatz anderer Verschlüsselungsarten denkbar.

Am Ausgang der Verschlüsselungsstufen 30₁ bis 30ₙ werden die verschlüsselten Klardatenblöcke 34₁ bis 34ₙ als Chiffrierdatenblöcke 35₁ bis 35ₙ ausgegeben. Auf Grund der XOR-Verknüpfung 36₁ bis 36ₙ ist sichergestellt, dass die Bitreihenfolge innerhalb der Klardatenblöcke 34₁ bis 34ₙ auch der Bitreihenfolge in den Chiffrierblöcken 35₁ bis 35ₙ entspricht. Eine Information, die in den Klardatenblöcken 34₁ bis 34ₙ auf einer ganz bestimmten Bitposition innerhalb der z.B. 128 Bit zu finden ist, ist daher ebenfalls an der gleichen Position in den Chiffrierdatenblöcken 35₁ bis 35ₙ zu finden. Im Weiteren werden durch die Verarbeitungseinheit 20 die verschiedenen Chiffrierdatenblöcke 35₁ bis 35ₙ in den Nutzdatenbereich des IP-Datenpakets 11 eingefügt. In diesem Fall ist darauf zu achten, dass die Länge der Chiffrierdatenblöcke 35₁ bis 35ₙ kleiner ist als der zulässige MTU-Wert, weil um den Nutzdatenbereich herum noch ein äußerer IP-Header 13 in dem IP-Datenpaket 11 aufgebaut werden muss.

Nachdem die Klardatenblöcke 34₁ bis 34ₙ durch die Verschlüsselungsstufen 30₁ bis 30ₙ verschlüsselt sind, wodurch die Chiffrierdatenblöcke 35₁ bis 35ₙ erzeugt werden, wird in einem nächsten Schritt eine Prüfsumme 15₁ über alle Chiffrierdatenblöcke 35₁ bis 35ₙ gebildet. Hierzu werden bekannte Authentifizierungsdaten 13 mit dem Galoisfeldvektor H in der Multiplikationseinheit 37 multipliziert, wobei das Ergebnis mit einer XOR-Verknüpfung 38₁ mit dem Chiffrierdatenblock 35₁ verknüpft wird. Der Aufbau des Galoisfeldvektor H ist dabei in der Veröffentlichung "Galois/Counter Mode of Operation" beschrieben, worauf hiermit verwiesen wird. Das Ergebnis dieser XOR-Verknüpfung 38₁ wird in einer Multiplikationseinheit 37 mit dem Galoisfeldvektor H multipliziert und anschließend mit der nächsten XOR-Verknüpfung 38₂ mit dem nächsten Chiffrierdatenblock 35₂ verknüpft, die aus Übersichtsgründen in den Zeichnungsfiguren nicht dargestellt sind.

Dies geschieht so lange, bis der letzte Chiffrierdatenblock 35ₙ über die letzte XOR-Verknüpfung 38ₙ verknüpft ist. Das Ergebnis der letzten XOR-Verknüpfung 38ₙ wird in einer Multiplikationseinheit 37 mit dem Galoisfeldvektor H multipliziert und anschließend mit der XOR-Verknüpfungseinheit 39 mit dem Ergebnis einer Konkatenation 41 aus einer Bitlänge der Authentifizierungsdaten 13 und aus einer Bitlänge des Chiffrierdatenblocks 35 verknüpft. Eine Konkatenation 41 aus den Bits 001 und 10111 ergibt die Bitfolge 00110111. Unter Konkatenation wird daher das Aneinanderfügen von Bitfolgen zu einer Gesamt-Bitfolge verstanden.

Das Ergebnis der XOR-Verknüpfungseinheit 39 wird in der Multiplikationseinheit 37 mit dem Galoisfeldvektor H multipliziert. Dieses Ergebnis wird der XOR-Verknüpfungseinheit 40 zugeführt und mit dem durch die Verschlüsselungseinheit 31₀ mit dem Schlüssel 32 verschlüsselten Initialvektor 14₀ verknüpft. Als Ergebnis liefert die XOR-Verknüpfungseinheit 40 die Prüfsumme 15₁.

Der Vorteil der bei der Anmelderin bisher intern benutzten Authentifizierungs-Verschlüsselungseinheit, die entsprechend Fig. 4A arbeitet, ist, dass die Verschlüsselungsstufen 30₁ bis 30ₙ nahezu parallel arbeiten und auch die Generierung der Prüfsumme 15₁ über die einzelnen Chiffrierdatenblöcke 35₁ bis 35ₙ sehr gut in dieses Konzept integriert werden können.

Für den Fall, dass die Authentifizierungs-Verschlüsselungseinheit 6 aus Fig. 2B entsprechend dem Schaltbild aus Fig. 4A aufgebaut ist, würde die übergeordnete Recheneinheit 1 die Prüfsumme 15₁ in den Nutzdatenbereich des IP-Datenpakets 11 integrieren. Über die an die Authentifizierungs-Verschlüsselungseinheit 6 angeschlossene Sendeeinheit 25 würde das IP-Datenpaket an den Empfänger übertragen werden.

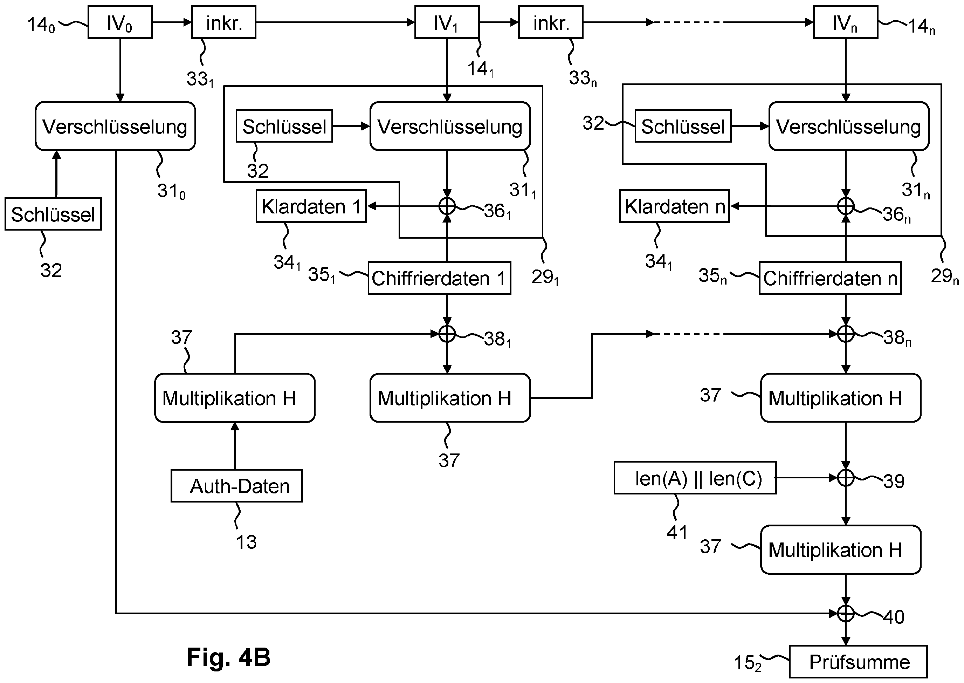

Zur Vollständigkeit ist in Fig. 4B ein Übersichtsschaltbild einer bei der Anmelderin bisher intern benutzten Authentifizierungs-Entschlüsselungseinheit 7 dargestellt, die nach dem Prinzip des Galois Counter Mode arbeitet. Im Wesentlichen ist die Funktionsweise der Authentifizierungs-Entschlüsselungseinheit aus Fig. 4B identisch mit der Authentifizierungs-Verschlüsselungseinheit aus Fig. 4A, weshalb im Weiteren auf die Beschreibung zu Fig. 4A verwiesen wird.

Der Unterschied zwischen der Authentifizierungs-Verschlüsselungseinheit aus Fig. 4A und der Authentifizierungs-Entschlüsselungseinheit aus Fig. 4B besteht darin, dass in Fig. 4B die XOR-Verknüpfungseinheiten 36₁ bis 36ₙ den Ausgang der Verschlüsselungseinheiten 31₁ bis 31ₙ mit den empfangenen Chiffrierdatenblöcken 35₁ bis 35ₙ verknüpft, so dass am Ausgang der XOR-Verknüpfungseinheiten 36₁ bis 36ₙ die Klardatenblöcke 34₁ bis 34ₙ anliegen. In diesem Fall handelt es sich bei den Verschlüsselungsstufen 30₁ bis 30ₙ um die Entschlüsselungsstufen 29₁ bis 29ₙ, wobei die Entschlüsselungsstufen 29₁ bis 29ₙ einen Initialisierungsvektor 14₁ bis 14ₙ mit dem Schlüssel 32 in den Verschlüsselungseinheiten 31₁ bis 31ₙ verschlüsseln. Einzig der Ausgang der Verschlüsselungseinheiten 31₁ bis 31ₙ innerhalb der Entschlüsselungsstufen 29₁ bis 29ₙ wird zusammen mit den XOR-Verknüpfungseinheiten 36₁ bis 36ₙ und den Chiffrierdatenblöcken 35₁ bis 35ₙ dazu verwendet, um die Klardatenblöcke 34₁ bis 34ₙ zu erzeugen.

Der Initialisierungsvektor 14₀ wird der Authentifizierungs-Entschlüsselungseinheit über das IP-Datenpaket 11 mitgeteilt. Aus dem IP-Datenpaket 11 sind der Authentifizierungs-Entschlüsselungseinheit ebenfalls die Authentifizierungsdaten 13 bekannt, die bevorzugt aus den Steuerdaten (IP-Header) bestehen. Gemäß dem zu Fig. 4A erläuterten Ablauf berechnet auch die Authentifizierungs-Entschlüsselungseinheit eine Prüfsumme 15₂, indem sie hierzu die Chiffrierdatenblöcke 35₁ bis 35ₙ und die Authentifizierungsdaten 13 verwendet. Sobald die Authentifizierungs-Entschlüsselungseinheit die Prüfsumme 15₂ berechnet hat, wird die berechnete Prüfsumme 15₂ mit der Prüfsumme 15₁ verglichen, die die Authentifizierungs-Entschlüsselungseinheit in dem IP-Datenpaket 11 empfangen hat. Stimmen beide Prüfsummen 15₁, 15₂ überein, so ist es sehr wahrscheinlich, dass es sich bei den Chiffrieren 35₁ bis 35ₙ auch um die Chiffriere 35₁ bis 35ₙ handelt, die von der Authentifizierungs-Verschlüsselungseinheit erzeugt wurden.

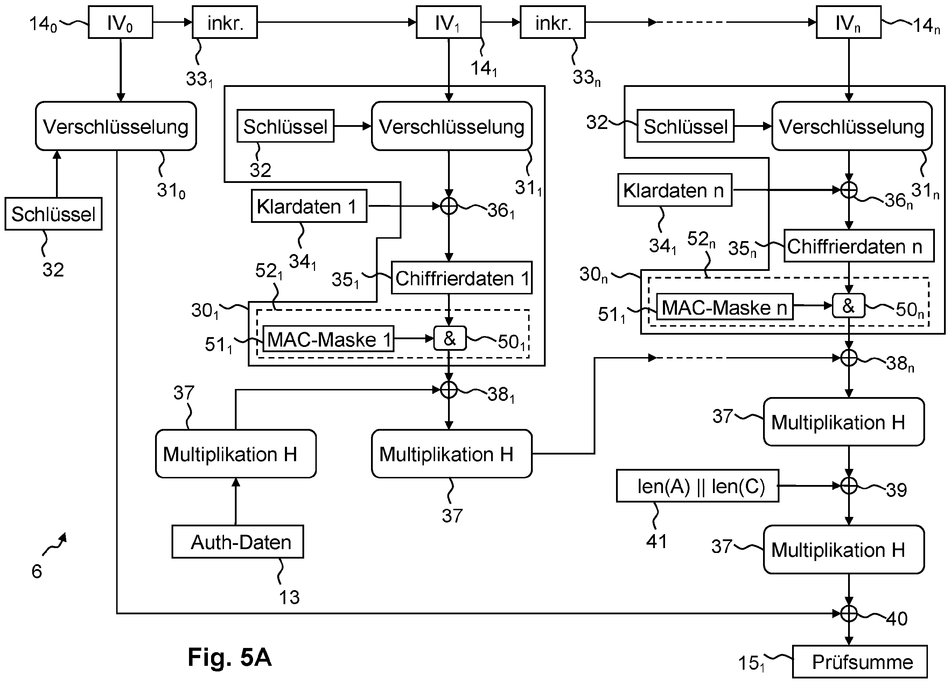

Fig. 5A zeigt ein Ausführungsbeispiel der erfindungsgemäßen Authentifizierungs-Verschlüsselungseinheit 6, die innerhalb einer Recheneinheit 1 integriert ist. Die erfindungsgemäße Authentifizierungs-Verschlüsselungseinheit 6 basiert auf den Prinzipien des Galois Counter Mode, wie sie in den voran gegangenen Figurenbeschreibungen 4A und 4B bereits ausführlich erläutert wurde. Aus diesem Grund wird bei den gleichen Bezugszeichen auf die Figurenbeschreibungen zu den Figuren 4A und 4B verwiesen.

Im Unterschied dazu, weist jede Verschlüsselungsstufe 30₁ bis 30ₙ noch eine Auswahleinheit 52₁ bis 52ₙ auf, durch die auswählbar ist, welche Datenbits innerhalb jedes Chiffrierdatenblocks 35₁ bis 35ₙ für die Berechnung der gemeinsamen Prüfsumme 15₁ zu verwenden sind. Hierzu verknüpft die Auswahleinheit 52₁ bis 52ₙ innerhalb jeder Verschlüsselungsstufe 30₁ bis 30ₙ eine frei wählbare Bitmaske 51₁ bis 51ₙ über ein logisches UND 50₁ bis 50ₙ mit den Chiffrierdatenblöcken 35₁ bis 35ₙ der einzelnen Verschlüsselungsstufen 30₁ bis 30ₙ. Die Bitmaske 51₁ bis 51ₙ wird auch MAC-Maske (engl. message authentication code; dt. Nachrichten-Authentifizierungscode) genannt. Für den Fall, dass eine erste Bitfolge 0101 mit einer zweiten Bitfolge 0011 mittels einer logischen UND-Verknüpfung verknüpft wird, resultiert daraus die Bitfolge 0001. Die frei wählbare Bitmaske 51₁ bis 51ₙ weist bevorzugt die gleiche Bitlänge auf, wie die Chiffrierdatenblöcke 35₁ bis 35ₙ. Je ein logisches UND 50₁ bis 50ₙ und je eine Bitmaske 51₁ bis 51ₙ sind dabei in einer Auswahleinheit 51₁ bis 51ₙ integriert.

Sobald ein erster logischer Zustand, der eine logische Eins sein kann, innerhalb einer Stelle innerhalb der Bitmaske 51₁ bis 51ₙ gesetzt ist, wird das entsprechende Bit an derselben Stelle innerhalb des Chiffrierdatenblocks 35₁ bis 35ₙ für die Berechnung der gemeinsamen Prüfsumme 15₁ verwendet. Komplementär dazu wird bei einem zweiten logischen Zustand, der eine logische Null sein kann und an einer Stelle innerhalb der Bitmaske 51₁ bis 51ₙ gesetzt ist, das entsprechende Bit an derselben Stelle innerhalb des Chiffrierdatenblocks 35₁ bis 35ₙ für die Berechnung der gemeinsamen Prüfsumme 15₁ nicht verwendet. Dies ermöglicht, dass ein Klardatenblock 34₁ bis 34ₙ und damit ein Chiffrierdatenblock 35₁ bis 35ₙ sowohl Nutzdaten 10, als auch Steuerdaten 9 enthält, wobei gerade nur für die Steuerdaten 9 eine Prüfsumme 15₁ erstellt werden soll. Dadurch können die zu verwendenden Datenblöcke 8 innerhalb der erfindungsgemäßen Authentifizierungs-Verschlüsselungseinheit 6 auf sehr effiziente Weise zerteilt werden. Besonders bedeutsam ist auch die Tatsache, dass die grundsätzliche Arbeitsweise des "Galois Counter Mode" nicht verändert wird und weiterhin eine effiziente Realisierung in Soft- oder Hardware erfolgen kann.

Die einzelnen Bitmasken 51₁ bis 51ₙ der Auswahleinheiten 52₁ bis 52ₙ innerhalb jeder Verschlüsselungsstufe 30₁ bis 30ₙ können dabei beliebig und völlig unabhängig voneinander eingestellt werden. Einzig auf der Seite der Authentifizierungs-Entschlüsselungseinheit 7 müssen dieselben Bitmasken 51₁ bis 51ₙ in den Entschlüsselungsstufen 29₁ bis 29ₙ angewendet werden. Bevorzugt werden gerade die Datenbits innerhalb des Chiffrierdatenblocks 35₁ bis 35ₙ, die bereits einen Fehlerschutz beinhalten, durch die Auswahleinheit 52₁ bis 52ₙ von der Berechnung der gemeinsamen Prüfsumme 15₁ ausgenommen. Ein solcher Fehlerschutz besteht zum Beispiel bei der Übertragung von Video-, Bild- oder Sprachdaten, weil die Informationen auf der Empfängerseite an eine robuste Decodiereinheit gelangen, bzw. CRC (engl. cyclic redundancy check; dt. zyklische Redundanzsicherung) vorhanden ist. Ein einzelner Bitfehler würde sich im Anschluss daran für das menschliche Gehör nicht bemerkbar machen, bzw. er könnte auf einer Bildschirmeinheit 24 nicht oder nur kaum wahrgenommen werden. Anders sieht es dagegen aus, wenn die gesamten Nutzdaten 10 innerhalb des IP-Datenpakets 11 auf Grund einer inkonsistenten Prüfsumme 15₁, 15₂ verworfen werden, so dass je nach MTU-Wert und Bitrate ein Zeitraum von zum Beispiel 20ms auf der Empfängerseite fehlen würde.

Aus den genannten Gründen ist es daher sinnvoll, dass die erfindungsgemäße Authentifizierungs-Verschlüsselungseinheit 6, wie auch die erfindungsgemäße Authentifizierungs-Entschlüsselungseinheit 7 nach dem Prinzip des Galois Counter Mode arbeitet.

Der Vorteil dabei ist, dass innerhalb jeder Verschlüsselungsstufe 30₁ bis 30ₙ eine Verschlüsselungseinheit 31₁ bis 31ₙ stets einen anderen Initialisierungsvektor 14₁ bis 14ₙ mit dem gleichen Schlüssel verschlüsselt, so dass auch gleiche Klardatenblöcke 34₁ bis 34ₙ, die mit dem Ergebnis der Verschlüsselungseinheiten 31₁ bis 31ₙ über eine XOR-Verknüpfung 36₁ bis 36ₙ verknüpft werden, zu unterschiedlichen Chiffrierdatenblöcken 35₁ bis 35ₙ führen.

Das Ergebnis der ersten Auswahleinheit 52₁ wird über die XOR-Verknüpfungseinheit 38₁ mit dem Ergebnis einer Multiplikationseinheit 37 verknüpft, die Authentifizierungsdaten 13 mit dem Galoisfeldvektor H multipliziert. Die weiteren Auswahleinheiten 52₂ bis 52ₙ werden jeweils über eine Multiplikationseinheit 37 mit dem Ausgang der vorangegangenen XOR-Verknüpfungseinheit 38₁ bis 38ₙ₋₁ über die XOR-Verknüpfungseinheit 38₂ bis 38ₙ verbunden. Die Berechnung der Prüfsumme 15₁ erfolgt in Fig. 5A analog zu den Ausführungen in Fig. 4A, worauf im Weiteren verwiesen wird.

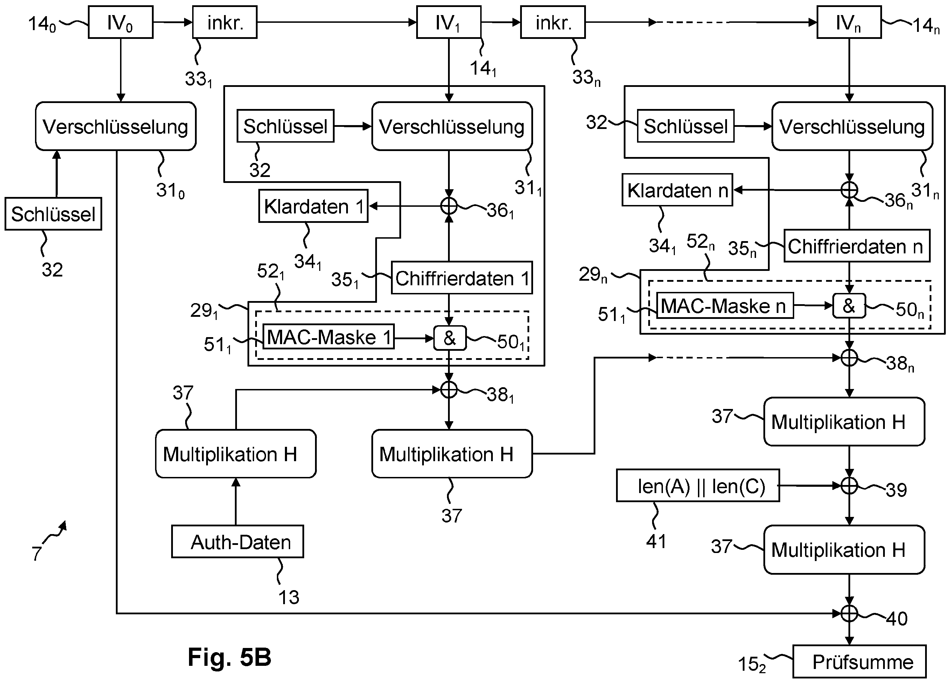

Fig. 5B zeigt ein Ausführungsbeispiel einer erfindungsgemäßen Authentifizierungs-Entschlüsselungseinheit 7, die bevorzugt in einer Recheneinheit 1 integriert ist. Der Unterschied zu dem erfindungsgemäßen Ausführungsbeispiel aus Fig. 5A besteht darin, dass es sich bei den Verschlüsselungsstufen 30₁ bis 30ₙ nun um die Entschlüsselungsstufen 29₁ bis 29ₙ handelt, wobei die XOR-Verknüpfungseinheiten 36₁ bis 36ₙ das Ergebnis der Verschlüsselungseinheiten 31₁ bis 31ₙ mit den Chiffrierdatenblöcken 35₁ bis 35ₙ verknüpft, so dass am Ausgang der XOR-Verknüpfungseinheiten 36₁ bis 36ₙ die Klardatenblöcke 34₁ bis 34ₙ anliegen. Insgesamt weist jede Authentifizierungs-Entschlüsselungseinheit 7 zumindest eine Entschlüsselungsstufe 29₁ bis 29ₙ auf, wobei jede Entschlüsselungsstufe 29₁ bis 29ₙ einen Chiffrierdatenblock 35₁ bis 35ₙ entschlüsselt und dabei einen Klardatenblock 34₁ bis 34ₙ generiert.

Die durch die Authentifizierungs-Entschlüsselungseinheit 7 in der Auswahleinheit 52₁ bis 52ₙ angelegten Bitmasken 51₁ bis 51ₙ müssen dabei identisch zu den innerhalb der Authentifizierungs-Verschlüsselungseinheit 6 in den Auswahleinheiten 52₁ bis 52ₙ angelegten Bitmasken 51₁ bis 51ₙ sein. Die zu verwendende Bitmaske 51₁ bis 51ₙ kann ebenfalls in dem äußeren IP-Header 13 angegeben werden. Hierzu können beispielsweise drei Bit zur Verfügung gestellt werden, um acht verschiedene Bitmasken 51₁ bis 51ₙ darzustellen.

Im Weiteren wird innerhalb der erfindungsgemäßen Authentifizierungs-Entschlüsselungseinheit 7 anhand der bekannten Authentifizierungsdaten 13 und den bekannten Chiffrierdatenblöcken 35₁ bis 35ₙ und den bekannten Bitmasken 51₁ bis 51ₙ die Prüfsumme 15₂ berechnet. Für die Art und Weise, wie die Prüfsumme 15₂ berechnet wird, wird auf die Figurenbeschreibung zu den Figuren 5A und 4A verwiesen. Für den Fall, dass die von der Authentifizierungs-Entschlüsselungseinheit 7 berechnete Prüfsumme 15₂ nicht mit der Prüfsumme 15₁ übereinstimmt, die in dem IP-Datenpaket 11 empfangen wurde, werden alle Steuer- und Nutzdaten, deren Integrität nicht verifiziert werden konnte, verworfen. Empfangene Daten, die nicht zur Berechnung der Prüfsumme 15₂ herangezogen wurden, werden nach ihrer Entschlüsselung normal weiterverarbeitet. Dies dient dazu, dass Übertragungsfehler, die innerhalb beispielsweise einer Luftschnittstelle auftreten können, nicht dazu führen, dass bei einem einzigen Bitfehler das ganze IP-Datenpaket 11 mit Videodaten und/oder Sprachdaten und/oder Bilddaten innerhalb des Nutzdatenbereichs verworfen wird.

Je nach Qualität der Verbindung zwischen den mobilen Endgeräten 2₁ und 2₂ können die Bitmasken 51₁ bis 51₂ angepasst werden. Für den Fall, dass die Verbindung von hoher Qualität ist, können alle Bits innerhalb der Chiffrierdatenblöcke 35₁ bis 35ₙ für die Berechnung der Prüfsumme 15₁, 15₂ herangezogen werden, wobei in dem Fall, dass die Verbindung eine schlechte Qualität aufweist, nur die Bits für die Steuerdaten für die Berechnung der Prüfsumme 15₁, 15₂ herangezogen werden.

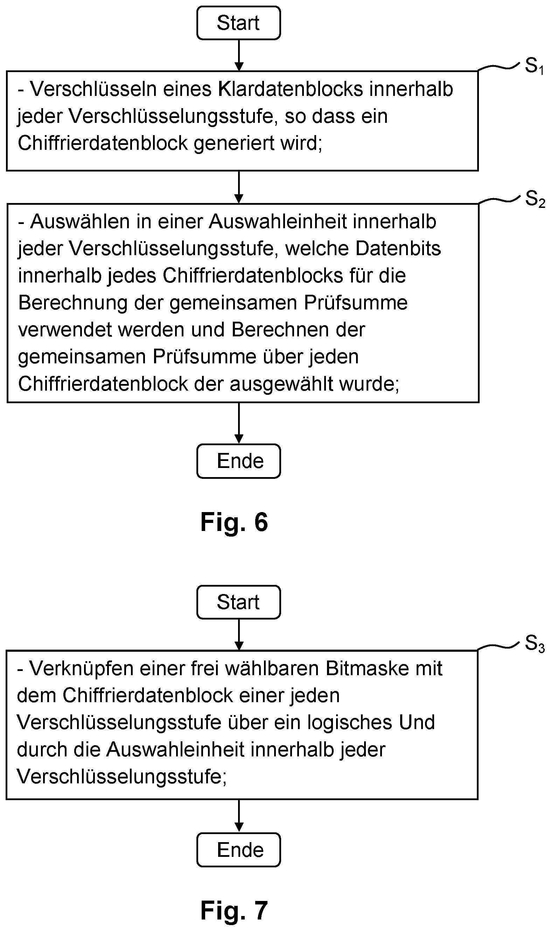

Fig. 6 zeigt ein Ausführungsbeispiel eines Flussdiagramms des erfindungsgemäßen Verfahrens für eine Authentifizierungs-Verschlüsselungseinheit 6, die zumindest eine Verschlüsselungsstufe 30₁ bis 30ₙ aufweist. In einem ersten Verfahrensschritt S₁ wird ein Klardatenblock 34₁ bis 34ₙ innerhalb einer jeden Verschlüsselungsstufe 30₁ bis 30ₙ verschlüsselt, so dass daraus ein Chiffrierdatenblock 35₁ bis 35ₙ erzeugt wird.

In einem zweiten Verfahrensschritt S₂ wird innerhalb einer Auswahleinheit 52₁ bis 52ₙ in jeder Verschlüsselungsstufe 30₁ bis 30ₙ ausgewählt, welche Datenbits innerhalb jedes Chiffrierdatenblocks 35₁ bis 35ₙ für die Berechnung der gemeinsamen Prüfsumme 15₁ verwendet werden. Anschließend wird die gemeinsame Prüfsumme 15₁ über jeden Chiffrierdatenblock 35₁ bis 35ₙ, bzw. über jedes Datenbit innerhalb des Chiffrierdatenblicks 35₁ bis 35ₙ berechnet, der von der Auswahleinheit 52₁ bis 52ₙ ausgewählt wurde.

Fig. 7 zeigt ein weiteres Ausführungsbeispiel eines Flussdiagramms des erfindungsgemäßen Verfahrens für eine Authentifizierungs-Verschlüsselungseinheit 6, welches einen Verfahrensschritt S₃ aufweist, der nach dem Verfahrensschritt S₂ des vorherigen Flussdiagramms ausgeführt werden kann. Innerhalb des Verfahrensschrittes S₃ wird eine frei wählbare Bitmaske 51₁ bis 51ₙ mit dem Chiffrierdatenblock 35₁ bis 35ₙ jeder Verschlüsselungsstufe 30₁ bis 30ₙ über ein logisches UND 50₁ bis 50ₙ innerhalb einer Auswahleinheit 52₁ bis 52ₙ verknüpft. Besonders vorteilhaft ist, dass eine solche logische UND-Verknüpfung 50₁ bis 50ₙ sehr einfach in Hardware realisiert werden kann.

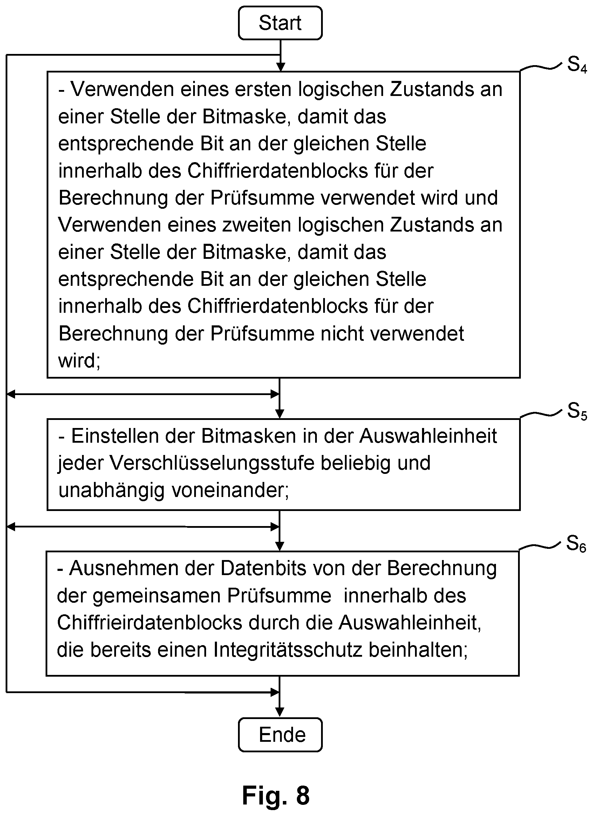

Fig. 8 zeigt ein weiteres Ausführungsbeispiel eines Flussdiagramms des erfindungsgemäßen Verfahrens für eine Authentifizierungs-Verschlüsselungseinheit 6. Der Verfahrensschritt S₄ wird direkt nach dem Verfahrensschritt S₃ ausgeführt und legt fest, dass ein erster logischer Zustand, der eine logische Eins beinhalten kann, an einer Stelle der Bitmaske 51₁ bis 51ₙ verwendet wird, damit das entsprechende Bit an derselben Stelle innerhalb des Chiffrierdatenblocks 35₁ bis 35ₙ für die Berechnung der Prüfsumme 15₁ verwendet wird und dass ein zweiter logischer Zustand, der eine logische Null beinhalten kann, an einer Stelle der Bitmaske 51₁ bis 51ₙ verwendet wird, damit das entsprechende Bit an derselben Stelle innerhalb des Chiffrierdatenblocks 35₁ bis 35ₙ für die Berechnung der Prüfsumme 15₁ nicht verwendet wird.

Der nachfolgende Verfahrensschritt S₅ kann auch direkt nach dem Verfahrensschritt S₃ ausgeführt werden. Innerhalb des Verfahrensschritts S₅ können die Bitmasken 51₁ bis 51ₙ in der Auswahleinheit 52₁ bis 52ₙ jeder Verschlüsselungsstufe 30₁ bis 30ₙ beliebig und völlig unabhängig voneinander eingestellt werden.

In einem weiteren Verfahrensschritt S₆, der auch direkt nach einem der Verfahrensschritte S₂, S₃ oder S₄ ausgeführt werden kann, werden Chiffrierdatenblöcke 35₁ bis 35ₙ, die bereits einen Integritätsschutz beinhalten, von der Berechnung der gemeinsamen Prüfsumme 15₁ durch die Auswahleinheit 52₁ bis 52ₙ ausgenommen. Dabei kann es sich um Sprach-, Bild- oder Videodaten handeln.

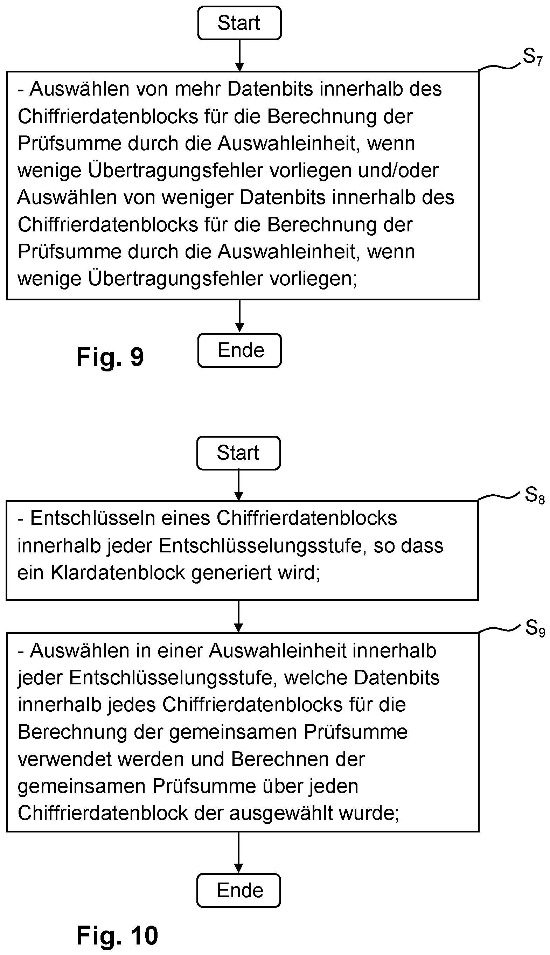

Fig. 9 zeigt ein weiteres Ausführungsbeispiel eines Flussdiagramms des erfindungsgemäßen Verfahrens für eine Authentifizierungs-Verschlüsselungseinheit 6 mit dem erfindungsgemäßen Verfahrensschritt S₇. Der Verfahrensschritt S₇ kann sowohl nach dem Verfahrensschritt S₂, als auch nach den Verfahrensschritten S₃, S₄ oder S₅ ausgeführt werden. Der Verfahrensschritt S₇ sorgt dafür, dass die Bitmaske 51₁ bis 51ₙ dynamisch an die Qualität des Übertragungskanals zwischen den mobilen Endgeräten 2₁ und 2ₙ angepasst wird. Für den Fall, dass der Übertragungskanal wenig gestört ist, werden mehr Datenbits innerhalb des Chiffrierdatenblocks 35₁ bis 35ₙ für die Berechnung der Prüfsumme 15₁ durch die Auswahleinheit 52₁ bis 52ₙ einbezogen. Andererseits werden für den Fall, dass der Übertragungskanal stärker gestört ist weniger Datenbits innerhalb des Chiffrierdatenblocks 35₁ bis 35ₙ für die Berechnung der Prüfsumme 15₁ durch die Auswahleinheit 52₁ bis 52ₙ eingezogen.

Fig. 10 zeigt ein Ausführungsbeispiel eines Flussdiagramms für das erfindungsgemäße Verfahren mit einer Authentifizierungs-Entschlüsselungseinheit 7, welches die Verfahrensschritte S₈ und S₉ aufweist. Innerhalb des Verfahrensschritts S₈ wird ein Chiffrierdatenblock 35₁ bis 35ₙ innerhalb einer jeden Entschlüsselungsstufe 29₁ bis 29ₙ entschlüsselt, so dass daraus jeweils ein Klardatenblock 34₁ bis 34ₙ erzeugt wird.

In dem Verfahrensschritt S₉ wird durch eine Auswahleinheit 52₁ bis 52ₙ innerhalb einer jeden Entschlüsselungsstufe 29₁ bis 29ₙ ausgewählt, welche Datenbits innerhalb jedes Chiffrierdatenblocks 35₁ bis 35ₙ für die Berechnung der gemeinsamen Prüfsumme 15₂ verwendet werden. Anschließend wird die gemeinsame Prüfsumme 15₂ über jeden Chiffrierdatenblock 35₁ bis 35ₙ der ausgewählt wurde berechnet.

Auf Grund der Tatsache, dass das Verfahren für die Authentifizierungs-Entschlüsselungseinheit 7 weitgehend analog zu dem Verfahren für die Authentifizierungs-Verschlüsselungseinheit 6 abläuft, können die Verfahrensschritte S₃, S₄, S₅, S₆ und S₇, wenn sie auf die Authentifizierungs-Entschlüsselungseinheit 7 bezogen werden zusammen mit den Verfahrensschritten S₈ und S₉ verwendet werden. Vor allem können alle Merkmale, die sich auf eine Authentifizierungs-Verschlüsselungseinheit 6 beziehen auch auf eine Authentifizierungs-Entschlüsselungseinheit 7 angewandt werden. Wie bereits erläutert handelt es sich bei n stets um eine natürliche Zahl größer oder gleich eins.

Das erfindungsgemäße Verfahren für die Authentifizierungs-Verschlüsselungseinheit 6 und die Authentifizierungs-Entschlüsselungseinheit 7 eignet sich besonders dafür, um in einem Programm implementiert zu werden, welches auf einem Computer oder einem digitalen Signalprozessor oder sonstigen elektronischen Recheneinheiten ausgeführt wird. Das Verfahren für die Authentifizierungs-Verschlüsselungseinheit 6 und für die Authentifizierungs-Entschlüsselungseinheit 7 eignet sich ebenfalls besonders, um insbesondere auf einem maschinenlesbaren Träger als Programmcode gespeichert zu werden, damit das Programm später auf einem Computer oder einem digitalen Signalprozessor oder sonstigen elektronischen Recheneinheiten ausgeführt werden kann.

Im Rahmen der Erfindung sind alle beschriebenen und/oder gezeichneten Merkmale beliebig miteinander kombinierbar.

## Patentansprüche

1. Authentifizierungs-Verschlüsselungseinheit (6), die zumindest eine Verschlüsselungsstufe (30₁ bis 30ₙ) aufweist,
wobei jede Verschlüsselungsstufe (30₁ bis 30ₙ) derart ausgebildet ist, dass sie einen Klardatenblock (34₁ bis 34ₙ) verschlüsselt und dabei einen Chiffrierdatenblock (35₁ bis 35ₙ) generiert und
wobei über jeden Chiffrierdatenblock (35₁ bis 35ₙ) eine gemeinsame Prüfsumme (15₁) berechnet ist,
**dadurch gekennzeichnet,**
**dass** über eine Auswahleinheit (52₁ bis 52ₙ) innerhalb jeder Verschlüsselungsstufe (30₁ bis 30ₙ) auswählbar ist, welche Datenbits innerhalb jedes Chiffrierdatenblocks (35₁ bis 35ₙ) für die Berechnung der gemeinsamen Prüfsumme (15₁) zu verwenden sind, um einzig Steuerdaten innerhalb der Chiffrierdatenblöcke (35₁ bis 35ₙ) für die Berechnung einer Prüfsumme (15₁) zu verwenden.

2. Authentifizierungs-Verschlüsselungseinheit nach Anspruch 1,
**dadurch gekennzeichnet,**
**dass** die Auswahleinheit (52₁ bis 52ₙ) innerhalb jeder Verschlüsselungsstufe (30₁ bis 30ₙ) eine frei wählbare Bitmaske (51₁ bis 51ₙ) über ein logisches UND (50₁ bis 50ₙ) mit dem Chiffrierdatenblock (35₁ bis 35ₙ) der Verschlüsselungsstufe (30₁ bis 30ₙ) verknüpft.

3. Authentifizierungs-Verschlüsselungseinheit nach Anspruch 2,
**dadurch gekennzeichnet,**
**dass** ein erster logischer Zustand in einer Stelle innerhalb der Bitmaske (51₁ bis 51ₙ) gesetzt ist, wenn das entsprechende Bit an derselben Stelle innerhalb des Chiffrierdatenblocks (35₁ bis 35ₙ) für die Berechnung der gemeinsamen Prüfsumme (15₁) zu verwenden ist und/oder dass ein zweiter logischer Zustand in einer Stelle innerhalb der Bitmaske (51₁ bis 51ₙ) gesetzt ist, wenn das entsprechende Bit an derselben Stelle innerhalb des Chiffrierdatenblocks (35₁ bis 35ₙ) für die Berechnung der gemeinsamen Prüfsumme (15₁) nicht zu verwenden ist.

4. Authentifizierungs-Verschlüsselungseinheit nach Anspruch 2 oder 3,
**dadurch gekennzeichnet,**
**dass** die Bitmasken (51₁ bis 51ₙ) in der Auswahleinheit (52₁ bis 52ₙ) jeder Verschlüsselungsstufe (30₁ bis 30ₙ) beliebig und unabhängig voneinander einstellbar sind.

5. Authentifizierungs-Verschlüsselungseinheit nach einem der vorherigen Ansprüche,
**dadurch gekennzeichnet,**
**dass** Datenbits innerhalb der Chiffrierdatenblöcke (35₁ bis 35ₙ), die bereits einen Integritätsschutz beinhalten oder keinen Integritätsschutz benötigen, durch die Auswahleinheit (52₁ bis 52ₙ) von der Berechnung der gemeinsamen Prüfsumme (15₁) ausgenommen sind.

6. Authentifizierungs-Verschlüsselungseinheit nach einem der vorherigen Ansprüche,
**dadurch gekennzeichnet,**
**dass** es sich bei der Authentifizierungs-Verschlüsselungseinheit (6) um eine Authentifizierungs-Verschlüsselungseinheit (6) handelt, die nach dem Prinzip des Galois Counter Mode arbeitet.

7. Authentifizierungs-Verschlüsselungseinheit nach einem der vorherigen Ansprüche,
**dadurch gekennzeichnet,**
**dass** mehr Datenbits innerhalb der Chiffrierdatenblöcke (35₁ bis 35ₙ) für die Berechnung der Prüfsumme (15₁) durch die Auswahleinheit (52₁ bis 52ₙ) ausgewählt sind, wenn eine Übertragung der Chiffrierdatenblöcke (35₁ bis 35ₙ) wenige Übertragungsfehler aufweist, oder
**dass** weniger Datenbits innerhalb der Chiffrierdatenblöcke (35₁ bis 35ₙ) für die Berechnung der Prüfsumme (15₁) durch die Auswahleinheit (52₁ bis 52ₙ) ausgewählt sind, wenn eine Übertragung der Chiffrierdatenblöcke (35₁ bis 35ₙ) mehr Übertragungsfehler aufweist.

8. Authentifizierungs-Verschlüsselungseinheit nach einem der vorherigen Ansprüche,
**dadurch gekennzeichnet,**
**dass** die einzelnen Verschlüsselungsstufen (30₁ bis 30ₙ) derart miteinander in Verbindung stehen, dass auch aus gleichen Klardatenblöcken (34₁ bis 34ₙ) nach der Verschlüsselung unterschiedliche Chiffrierdatenblöcke (35₁ bis 35ₙ) resultieren.

9. Authentifizierungs-Verschlüsselungseinheit nach Anspruch 8,
**dadurch gekennzeichnet,**
**dass** jede Verschlüsselungsstufe (30₁ bis 30ₙ) einen unterschiedlichen Initialisierungsvektor (14₁ bis 14ₙ) mit einem gleichen Schlüssel (32) verschlüsselt und die jeweiligen Klardatenblöcke (34₁ bis 34ₙ) mit dem verschlüsselten Initialisierungsvektor (14₁ bis 14ₙ) mit einer XOR-Verknüpfung (36₁ bis 36ₙ) verknüpft, um daraus die Chiffrierdatenblöcke (35₁ bis 35ₙ) zu erzeugen.

10. Authentifizierungs-Verschlüsselungseinheit nach einem der vorherigen Ansprüche,
**dadurch gekennzeichnet,**
**dass** Authentifizierungsdaten (13) in einer Multiplikationseinheit (37) mit einem Galoisfeldvektor multipliziert werden und über eine XOR-Verknüpfung (38₁) mit dem Ausgang der Auswahleinheit (52₁) verknüpft sind, wobei das Ergebnis in einer weiteren Multiplikationseinheit (37) mit einem weiteren Galoisfeldvektor multipliziert wird und über eine weitere XOR-Verknüpfung (38₂) immer mit einer Ausgangseinheit (52₂ bis 52ₙ) einer nächsten Verschlüsselungsstufe (30₂ bis 30ₙ) verknüpft wird, und
wobei der Ausgang der letzten XOR-Verknüpfung (38ₙ) in einer weiteren Multiplikationseinheit (37) mit einem Galoisfeldvektor multipliziert wird,
wobei das Ergebnis dieser Multiplikationseinheit (37) mittels einer XOR-Verknüpfung (39) mit dem Ergebnis einer Konkatenation (41) aus einer Bitlänge der Authentifizierungsdaten (13) und aus einer Bitlänge des Chiffrierdatenblocks (35₁ bis 35ₙ) verknüpft ist,
wobei das Ergebnis der XOR-Verknüpfung (39) in einer weiteren Multiplikationseinheit (37) mit dem Galoisfeldvektor multipliziert wird,
wobei das Ergebnis dieser Multiplikationseinheit (37) mit einer XOR-Verknüpfung (40) mit einem verschlüsselten einmaligen Initialisierungsvektor (14₀) verknüpft wird, woraus sich die Prüfsumme (15₁) berechnet.

11. Authentifizierungs-Entschlüsselungseinheit (7) die zumindest eine Entschlüsselungsstufe (29₁ bis 29ₙ) aufweist, wobei jede Entschlüsselungsstufe (29₁ bis 29ₙ) derart ausgebildet ist, dass sie einen Chiffrierdatenblock (35₁ bis 35ₙ) entschlüsselt und dabei einen Klardatenblock (34₁ bis 34ₙ) generiert und wobei über jeden Chiffrierdatenblock (35₁ bis 35ₙ) eine gemeinsame Prüfsumme (15₂) berechnet ist,
**dadurch gekennzeichnet,**
**dass** über eine Auswahleinheit (52₁ bis 52ₙ) innerhalb jeder Entschlüsselungsstufe (29₁ bis 29ₙ) auswählbar ist, welche Datenbits innerhalb jedes Chiffrierdatenblocks (35₁ bis 35ₙ) für die Berechnung der gemeinsamen Prüfsumme (15₂) zu verwenden sind, um einzig Steuerdaten innerhalb der Chiffrierdatenblöcke (35₁ bis 35ₙ) für die Berechnung einer Prüfsumme (15₂) zu verwenden.

12. Authentifizierungs-Entschlüsselungseinheit nach Anspruch 11,
**dadurch gekennzeichnet,**
**dass** eine Prüfsumme (15₂) berechnet wird, die mit der von der Authentifizierungs-Verschlüsselungseinheit (6) empfangenen Prüfsumme (15₁), verglichen wird.

13. Verfahren für eine Verschlüsselung mit einer Authentifizierungs-Verschlüsselungseinheit (6) die zumindest eine Verschlüsselungsstufe (30₁ bis 30ₙ) aufweist, mit folgendem Verfahrensschritt:
- Verschlüsseln (S₁) eines Klardatenblocks (34₁ bis 34ₙ) innerhalb jeder Verschlüsselungsstufe (30₁ bis 30ₙ), so dass ein Chiffrierdatenblock (35₁ bis 35ₙ) generiert wird,
**gekennzeichnet durch**
- Auswählen (S₂) in einer Auswahleinheit (52₁ bis 52ₙ) innerhalb jeder Verschlüsselungsstufe (30₁ bis 30ₙ), welche Datenbits innerhalb jedes Chiffrierdatenblocks (35₁ bis 35ₙ) für die Berechnung der gemeinsamen Prüfsumme (15₁) verwendet werden und Berechnen der gemeinsamen Prüfsumme (15₁) über jeden Chiffrierdatenblock (35₁ bis 35ₙ),
wobei einzig Steuerdaten innerhalb der Chiffrierdatenblöcke (35₁ bis 35ₙ) für die Berechnung einer Prüfsumme (15₁) verwendet werden.

14. Verfahren nach Anspruch 13,
**gekennzeichnet durch,**
den folgenden Verfahrensschritt:
- Verknüpfen (S₃) einer frei wählbaren Bitmaske (51₁ bis 51ₙ) mit dem Chiffrierdatenblock der Verschlüsselungsstufe (30₁ bis 30ₙ) über ein logisches UND (50₁ bis 50ₙ) **durch** die Auswahleinheit (52₁ bis 52ₙ) innerhalb jeder Verschlüsselungsstufe (30₁ bis 30ₙ).

15. Verfahren nach Anspruch 14,
**gekennzeichnet durch,**
den folgenden Verfahrensschritt:
- Verwenden (S₄) eines ersten logischen Zustands an einer Stelle der Bitmaske (51₁ bis 51ₙ), sobald das entsprechende Bit an derselben Stelle innerhalb des Chiffrierdatenblocks (35₁ bis 35ₙ) für die Berechnung der gemeinsamen Prüfsumme (15₁) verwendet werden soll, und
Verwenden eines zweiten logischen Zustands an einer Stelle der Bitmaske (51₁ bis 51ₙ), sobald das entsprechende Bit an derselben Stelle innerhalb des Chiffrierdatenblocks (35₁ bis 35ₙ) für die Berechnung der gemeinsamen Prüfsumme (15₁) nicht verwendet werden soll.

16. Verfahren nach Anspruch 14 oder 15,
**gekennzeichnet durch,**
den folgenden Verfahrensschritt:
- Einstellen (S₅) der Bitmasken (51₁ bis 51ₙ) in der Auswahleinheit (52₁ bis 52ₙ) jeder Verschlüsselungsstufe (30₁ bis 30ₙ) beliebig und unabhängig voneinander.

17. Verfahren nach einem der Ansprüche 13 bis 16, **gekennzeichnet durch,**
den folgenden Verfahrensschritt:
- Ausnehmen (S₆) der Datenbits von der Berechnung der gemeinsamen Prüfsumme (15₁) innerhalb des Chiffrierdatenblocks (35₁ bis 35ₙ) **durch** die Auswahleinheit (52₁ bis 52ₙ), die bereits einen Integritätsschutz beinhalten oder keinen Integritätsschutz benötigen.

18. Verfahren nach einem der Ansprüche 13 bis 17, **dadurch gekennzeichnet,**
**dass** die Authentifizierungs-Verschlüsselungseinheit (6) nach dem Prinzip des Galois Counter Mode arbeitet.

19. Verfahren nach einem der Ansprüche 13 bis 18, **gekennzeichnet durch,**
den folgenden Verfahrensschritt:
- Auswählen (S₇) von mehr Datenbits innerhalb des Chiffrierdatenblocks (35₁ bis 35ₙ) für die Berechnung der Prüfsumme (15₁) **durch** die Auswahleinheit (52₁ bis 52ₙ), wenn eine Übertragung der Chiffrierdatenblöcke (35₁ bis 35ₙ) wenige Übertragungsfehler aufweist und/oder
Auswählen von weniger Datenbits innerhalb des Chiffrierdatenblocks (35₁ bis 35ₙ) für die Berechnung der Prüfsumme (15₁) **durch** die Auswahleinheit (52₁ bis 52ₙ), wenn eine Übertragung der Chiffrierdatenblöcke (35₁ bis 35ₙ) mehr Übertragungsfehler aufweist.

20. Verfahren nach einem der Ansprüche 13 bis 19,
**dadurch gekennzeichnet,**
**dass** die einzelnen Verschlüsselungsstufen (30₁ bis 30ₙ) in dem Verfahren derart miteinander in Verbindung stehen, dass auch aus gleichen Klardatenblöcken (34₁ bis 34ₙ) nach der Verschlüsselung unterschiedliche Chiffrierdatenblöcke (35₁ bis 35ₙ) resultieren.

21. Verfahren nach Anspruch 20,
**gekennzeichnet durch,**
den folgenden Verfahrensschritt:
- Verschlüsseln eines unterschiedlichen Initialisierungsvektors (14₁ bis 14ₙ) **durch** jede Verschlüsselungsstufe (30₁ bis 30ₙ) mit den gleichen Schlüsseln (32) und
Verknüpfen der jeweiligen Klardatenblöcke (34₁ bis 34ₙ) mit dem verschlüsselten Initialisierungsvektor (14₁ bis 14ₙ) mit einer XOR-Verknüpfung, um daraus die Chiffrierdatenblöcke (35₁ bis 35ₙ) zu erzeugen.

22. Verfahren nach einem der Ansprüche 13 bis 21, **gekennzeichnet durch,**
die folgenden Verfahrensschritte:
- Multiplizieren von Authentifizierungsdaten (13) in einer Multiplikationseinheit (37) mit einem Galoisfeldvektor und
Verknüpfen dieser mit einer XOR-Verknüpfung (38₁) mit dem Ausgang der Auswahleinheit (52₁) und Multiplizieren des Ergebnisses in einer weiteren Multiplikationseinheit (37) mit einem weiteren Galoisfeldvektor;
- Wiederholen des vorangegangenen Verfahrensschritts solange, bis eine Verknüpfung mit einer XOR-Verknüpfung (38ₙ) mit dem Ausgang der Auswahleinheit (52ₙ) der letzten Verschlüsselungsstufe (30ₙ) hergestellt wird und
Multiplizieren des Ergebnisses in einer weiteren Multiplikationseinheit (37) mit einem Galoisfeldvektor;
- Verknüpfen des Ergebnisses dieser Multiplikationseinheit (37) mittels einer XOR-Verknüpfung (39) mit dem Ergebnis einer Konkatenation (41) aus einer Bitlänge der Authentifizierungsdaten (13) und aus einer Bitlänge des Chiffrierdatenblocks (35₁ bis 35ₙ) und
Multiplizieren des Ergebnisses der XOR-Verknüpfung (39) in einer weiteren Multiplikationseinheit (37) mit dem Galoisfeldvektor; und
- Verknüpfen des Ergebnisses dieser Multiplikationseinheit (37) mit einer XOR-Verknüpfung (40) mit einem verschlüsselten einmaligen Initialisierungsvektor (14₀), wodurch die Prüfsumme (15₁) berechnet wird.

23. Verfahren für eine Entschlüsselung mit einer Authentifizierungs-Entschlüsselungseinheit (7) die zumindest eine Entschlüsselungsstufe (29₁ bis 29ₙ) aufweist, mit dem folgenden Verfahrensschritt:
- Entschlüsseln (S₈) eines Chiffrierdatenblocks (35₁ bis 35ₙ) innerhalb jeder Entschlüsselungsstufe (29₁ bis 29ₙ), so dass ein Klardatenblock (34₁ bis 34ₙ) generiert wird,
**gekennzeichnet durch**
- Auswählen (S₉) in einer Auswahleinheit (52₁ bis 52ₙ) innerhalb jeder Entschlüsselungsstufe (29₁ bis 29ₙ), welche Datenbits innerhalb jedes Chiffrierdatenblocks (35₁ bis 35ₙ) für die Berechnung der gemeinsamen Prüfsumme (15₂) verwendet werden, und Berechnen der gemeinsamen Prüfsumme (15₂) über jeden Chiffrierdatenblock (35₁ bis 35ₙ),
wobei einzig Steuerdaten innerhalb der Chiffrierdatenblöcke (35₁ bis 35ₙ) für die Berechnung einer Prüfsumme (15₂) verwendet werden.

24. Verfahren nach Anspruch 23,
**gekennzeichnet durch,**
den folgenden Verfahrensschritt:
- Berechnen einer Prüfsumme (15₂), die mit der von der Authentifizierungs-Verschlüsselungseinheit (6) empfangenen Prüfsumme (15₁) verglichen wird.

25. Computerprogramm mit Programmcode-Mitteln, um alle Schritte gemäß einem der Ansprüche 13 bis 22 und/oder 23 bis 24 durchführen zu können, wenn das Programm auf einem Computer oder einem digitalen Signalprozessor oder sonstigen elektronischen Recheneinheiten ausgeführt wird.

26. Computerprogramm-Produkt mit insbesondere auf einem maschinenlesbaren Träger gespeicherten Programmcode-Mitteln, um alle Schritte gemäß einem der Ansprüche 13 bis 22 und/oder 23 bis 24 durchführen zu können, wenn das Programm auf einem Computer oder einem digitalen Signalprozessor oder sonstigen elektronischen Recheneinheiten ausgeführt wird.

## Claims

1. Authentication encryption unit (6) which comprises at least one encryption stage (30₁ to 30ₙ),
wherein each encryption stage (30₁ to 30ₙ) is formed in such a way that it encrypts a plain data block (34₁ to 34ₙ) and in the process generates a cipher data block (35₁ to 35ₙ) and
wherein each cipher data block (35₁ to 35ₙ) is used to calculate a common checksum (15₁),
**characterised in that**
a selection unit (52₁ to 52ₙ) within each encryption stage (30₁ to 30ₙ) can be used to select the data bits within each cipher data block (35₁ to 35ₙ) which are to be used for calculation of the common checksum (15₁) in order to use only control data within the cipher data blocks (35₁ to 35ₙ) for calculation of a checksum (15₁).

2. Authentication encryption unit according to claim 1, **characterised in that**
the selection unit (52₁ to 52ₙ) within each encryption stage (30₁ to 30ₙ) links an arbitrary bit mask (51₁ to 51ₙ) via a logical AND (50₁ to 50ₙ) with the cipher data block (35₁ to 35n) of the encryption stage (30₁ to 30ₙ).

3. Authentication encryption unit according to claim 2, **characterised in that**
a first logical state is set in a position within the bit mask (51₁ to 51ₙ) when the corresponding bit is to be used in the same position within the cipher data block (35₁ to 53ₙ) for calculation of the common checksum (15₁) and/or
**in that** a second logical state is set in a position within the bit mask (51₁ to 51ₙ) when the corresponding bit is not to be used in the same position within the cipher data block (35₁ to 35ₙ) for calculation of the common checksum (51₁).

4. Authentication encryption unit according to claim 2 or 3,
**characterised in that**
the bit masks (51₁ to 51ₙ) can be set arbitrarily and independently of one another in the selection unit (52₁ to 52ₙ) of each encryption stage (30₁ to 30ₙ).

5. Authentication encryption unit according to one of the preceding claims,
**characterised in that**
data bits within the cipher data blocks (35₁ to 35n) which already contain an integrity protection or require no integrity protection are removed from the calculation of the common checksum (15₁) by the selection unit (52₁ to 52ₙ).

6. Authentication encryption unit according to one of the preceding claims,
**characterised in that**
the authentication encryption unit (6) is an authentication encryption unit (6) which works according to the principle of the Galois Counter Mode.

7. Authentication encryption unit according to one of the preceding claims,
**characterised in that**
more data bits within the cipher data blocks (35₁ to 35ₙ) are selected for calculation of the checksum (15₁) by the selection unit (52₁ to 52ₙ) when a transmission of the cipher data blocks (35₁ to 35ₙ) has few transmission errors, or
**in that** fewer data bits within the cipher data blocks (35₁ to 35ₙ) are selected for calculation of the checksum (15₁) when a transmission of the cipher data blocks (35₁ to 35ₙ) has more transmission errors.

8. Authentication encryption unit according to one of the preceding claims,
**characterised in that**
the individual encryption stages (30₁ to 30ₙ) are connected with one another in such a way that different cipher data blocks (35₁ to 35ₙ) also result from the same plain data blocks (34₁ to 34ₙ) after encryption.

9. Authentication encryption unit according to claim 8, **characterised in that**
each encryption stage (30₁ to 30ₙ) encrypts a different initialisation vector (14₁ to 14ₙ) with a same key (32) and links the respective plain data blocks (34₁ to 34ₙ) with the encrypted initialisation vector (14₁ to 14ₙ) with an XOR operation (36₁ to 36ₙ) in order to generate the cipher data blocks (35₁ to 35ₙ) from them.

10. Authentication encryption unit according to one of the preceding claims,
**characterised in that**
authentication data (13) are multiplied with a Galois field vector in a multiplication unit (37) and linked with the output of the selection unit (52₁) via an XOR operation (38₁),
wherein the result is multiplied with a further Galois field vector in a further multiplication unit (37) and always linked with an output unit (52₂ to 52ₙ) of a next encryption stage (30₂ to 30ₙ) via a further XOR operation (38₂), and
wherein the output of the last XOR operation (38ₙ) is multiplied with a Galois field vector in a further multiplication unit (37),
wherein the result of this multiplication unit (37) is linked with the result of a concatenation (41) of a bit length of the authentication data (13) and a bit length of the cipher data block (35₁ to 35ₙ) via an XOR operation (39),
wherein the result of the XOR operation (39) is multiplied with the Galois field vector in a further multiplication unit (37),
wherein the result of this multiplication unit (37) is linked with an XOR operation (40) with an encrypted unique initialisation vector (14₀) from which the checksum (15₁) is calculated.

11. Authentication decryption unit (7) which comprises at least one decryption stage (29₁ to 29ₙ),
wherein each decryption stage (29₁ to 29ₙ) is formed in such a way that it decrypts a cipher data block (35₁ to 35ₙ) and in the process generates a plain data block (34₁ to 34ₙ) and
wherein a common checksum (15₂) is calculated using each cipher data block (35₁ to 35ₙ),
**characterised in that**
a selection unit (52₁ to 52ₙ) within each decryption stage (29₁ to 29ₙ) can be used to select the data bits within each cipher data block (35₁ to 35ₙ) which are to be used for calculation of the common checksum (15₂) in order to use only control data within the cipher data blocks (35₁ to 35ₙ) for calculation of a checksum (15₂).

12. Authentication decryption unit according to claim 11,
**characterised in that**
a checksum (15₂) is calculated which is compared with the checksum (15₁) received from the authentication encryption unit (6).

13. Method for encryption with an authentication encryption unit (6) which has at least one encryption stage (30₁ to 30ₙ), with the following method step:
- encryption (S₁) of a plain data block (34₁ to 34ₙ) within each encryption stage (30₁ to 30ₙ) so that a cipher data block (35₁ to 35ₙ) is generated, **characterised by**
- selection (S₂) in a selection unit (52₁ to 52ₙ) within each encryption stage (30₁ to 30ₙ) of the data bits within each cipher data block (35₁ to 35ₙ) which are to be used for calculation of the common checksum (15₁), and calculation of the common checksum (15₁) using each cipher data block (35₁ to 35ₙ),
wherein only control data within the cipher data blocks (35₁ to 35ₙ) are used for calculation of a checksum (15₁).

14. Method according to claim 13,
**characterised by**
the following method step:
- linking (S₃) of an arbitrary bit mask (51₁ to 51ₙ) with the cipher data block of the encryption stage (30₁ to 30ₙ) via a logical AND (50₁ to 50ₙ) by the selection unit (52₁ to 52ₙ) within each encryption stage (30₁ to 30ₙ).

15. Method according to claim 14,
**characterised by**
the following method step:
- use (S₄) of a first logical state in a position of the bit mask (51₁ to 51ₙ) as soon as the corresponding bit is to be used in the same position within the cipher data block (35₁ to 35ₙ) for calculation of the common checksum (15₁), and
use of a second logical state in a position of the bit mask (51₁ to 51ₙ) as soon as the corresponding bit is not to be used in the same position within the cipher data block (35₁ to 35ₙ) for calculation of the common checksum (15₁).

16. Method according to claim 14 or 15,
**characterised by**
the following method step:
- setting (S₅) of the bit masks (51₁ to 51ₙ) arbitrarily and independently of one another in the selection unit (52₁ to 52ₙ) of each encryption stage (30₁ to 30ₙ).

17. Method according to one of claims 13 to 16, **characterised by**
the following method step:
- removal (S₆) of the data bits within the cipher data block (35₁ to 35ₙ) which already include an integrity protection or require no integrity protection from the calculation of the common checksum (15₁) by the selection unit (52₁ to 52ₙ).

18. Method according to one of claims 13 to 17, **characterised in that**
the authentication encryption unit (6) works according to the principle of the Galois Counter Mode.

19. Method according to one of claims 13 to 18, **characterised by**
the following method step:
- selection (S₇) of more data bits within the cipher data block (35₁ to 35ₙ) for calculation of the checksum (15₁) by the selection unit (52₁ to 52ₙ) when a transmission of the cipher data blocks (35₁ to 35ₙ) has few transmission errors and/or
selection of fewer data bits within the cipher data block (35₁ to 35ₙ) for calculation of the checksum (15₁) by the selection unit (52₁ to 52ₙ) when a transmission of the cipher data blocks (35₁ to 35ₙ) has more transmission errors.

20. Method according to one of claims 13 to 19, **characterised in that**
the individual encryption stages (30₁ to 30ₙ) in the method are connected with one another in such a way that different cipher data blocks (35₁ to 35ₙ) also result from the same plain data blocks (34₁ to 34ₙ) after the encryption.

21. Method according to claim 20,
**characterised by**
the following method step:
- encryption of a different initialisation vector (14₁ to 14ₙ) by each encryption stage (30₁ to 30ₙ) with the same keys (32) and
linking of the respective plain data blocks (34₁ to 34ₙ) with the encrypted initialisation vector (14₁ to 14ₙ) with an XOR operation in order to generate the cipher data blocks (35₁ to 35ₙ) from them.

22. Method according to one of claims 13 to 21, **characterised by**
the following method steps:
- multiplication of authentication data (13) in a multiplication unit (37) with a Galois field vector and linking of this with an XOR operation (38₁) with the output of the selection unit (52₁) and multiplication of the result in a further multiplication unit (37) with a further Galois field vector;
- repetition of the preceding method step until a link with an XOR operation (38ₙ) is created with the output of the selection unit (52ₙ) of the last encryption stage (30ₙ) and multiplication of the result in a further multiplication unit (37) with a Galois field vector;
- linking of the result of this multiplication unit (37) via an XOR operation (39) with the result of a concatenation (41) of a bit length of the authentication data (13) and a bit length of the cipher data block (35₁ to 35ₙ) and multiplication of the result of the XOR operation (39) in a further multiplication unit (37) with the Galois field vector; and
- linking of the result of this multiplication unit (37) with an XOR operation (40) with an encrypted unique initialisation vector (14₀), through which the checksum (15₁) is calculated.

23. Method for decryption with an authentication decryption unit (7) which has at least one decryption stage (29₁ to 29ₙ), with the following method step:
- decryption (S₈) of a cipher data block (35₁ to 35ₙ) within each decryption stage (29₁ to 29ₙ) so that a plain data block (34₁ to 34ₙ) is generated,
**characterised by**
- selection (S₉) in a selection unit (52₁ to 52ₙ) within each decryption stage (29₁ to 29ₙ) of the data bits within each cipher data block (35₁ to 35ₙ) which are to be used for calculation of the common checksum (15₂), and calculation of the common checksum (15₂) using each cipher data block (35₁ to 35ₙ),
wherein only control data within the cipher data blocks (35₁ to 35ₙ) are used for calculation of a checksum (15₂).

24. Method according to claim 23,
**characterised by**
the following method step:
- calculation of a checksum (15₂) which is compared with the checksum (15₁) received from the authentication encryption unit (6).

25. Computer programme with programme code means in order to be able to carry out all the steps according to one of claims 13 to 22 and/or 23 to 24 when the programme is executed on a computer or a digital signal processor or other electronic calculating units.

26. Computer product with in particular programme code means stored on a machine-readable medium in order to be able to carry out all the steps according to one of claims 13 to 22 and/or 23 to 24 when the programme is executed on a computer or a digital signal processor or other electronic calculating units.

## Revendications

1. Unité d'authentification et de chiffrement (6), qui présente au moins un étage de chiffrement (30₁ à 30ₙ),
dans laquelle chaque étage de chiffrement (30₁ à 30ₙ) est réalisé de manière à chiffrer un bloc de données en clair (34₁ à 34ₙ) et à générer un bloc de données chiffrées (35₁ à 35ₙ) et
dans lequel un total de contrôle commun (15₁) est calculé par l'intermédiaire de chaque bloc de données chiffrées (35₁ à 35ₙ),
**caractérisée en ce**
**qu'**une unité de sélection (52₁ à 52ₙ) permet de sélectionner à l'intérieur de chaque étage de chiffrement (30₁ à 30ₙ) les bits de données contenus dans chaque bloc de données chiffrées (35₁ à 35ₙ) devant être utilisés pour calculer le total de contrôle commun (15₁), afin d'utiliser uniquement les données de commande contenues dans les blocs de données chiffrées (35₁ à 35ₙ) pour calculer un total de contrôle (15₁).

2. Unité d'authentification et de chiffrement selon la revendication 1,
**caractérisée en ce**
**que** l'unité de sélection (52₁ à 52ₙ) combine à l'intérieur de chaque étage de chiffrement (30₁ à 30ₙ) un masque de bits (51₁ à 51ₙ) pouvant être choisi librement au bloc de données chiffrées (35₁ à 35ₙ) de l'étage de chiffrement (30₁ à 30ₙ) par l'intermédiaire d'une fonction logique ET (50₁ à 50ₙ).

3. Unité d'authentification et de chiffrement selon la revendication 2,
**caractérisée en ce**
**qu'**un premier état logique est placé dans un endroit à l'intérieur du masque de bits (51₁ à 51ₙ) lorsque le bit correspondant doit être utilisé à ce même endroit à l'intérieur du bloc de données chiffrées (35₁ à 35ₙ) pour calculer le total de contrôle commun (15₁) et/ou
**qu'**un deuxième état logique est placé dans un endroit à l'intérieur du masque de bits (51₁ à 51ₙ) lorsque le bit correspondant ne doit pas être utilisé à ce même endroit à l'intérieur du bloc de données chiffrées (35₁ à 35ₙ) pour calculer le total de contrôle commun (15₁).

4. Unité d'authentification et de chiffrement selon la revendication 2 ou 3,
**caractérisée en ce**
**que** les masques de bits (51₁ à 51ₙ) peuvent être réglés arbitrairement et indépendamment les uns des autres dans l'unité de sélection (52₁ à 52ₙ) de chaque étage de chiffrement (30₁ à 30ₙ).

5. Unité d'authentification et de chiffrement selon l'une quelconque des revendications précédentes,
**caractérisée en ce**
**que** les bits de données qui sont contenus dans les blocs de données chiffrées (35₁ à 35ₙ) et qui comportent déjà une protection d'intégrité ou qui ne nécessitent aucune protection d'intégrité sont exclus du calcul du total de contrôle commun (15₁) par l'unité de sélection (52₁ à 52ₙ).

6. Unité d'authentification et de chiffrement selon l'une quelconque des revendications précédentes,
**caractérisée en ce**
**que** l'unité d'authentification et de chiffrement (6) est une unité d'authentification et de chiffrement (6) qui fonctionne selon le principe du mode Galois/compteur.

7. Unité d'authentification et de chiffrement selon l'une quelconque des revendications précédentes,
**caractérisée en ce**
**que** plusieurs bits de données contenus dans les blocs de données chiffrées (35₁ à 35ₙ) sont sélectionnés pour le calcul du total de contrôle commun (15₁) par l'unité de sélection (52₁ à 52ₙ), lorsqu'une transmission des blocs de données chiffrées (35₁ à 35ₙ) présente moins d'erreurs de transmission, ou
**que** moins de bits de données contenus dans les blocs de données chiffrées (35₁ à 35ₙ) sont sélectionnés pour le calcul du total de contrôle commun (15₁) par l'unité de sélection (52₁ à 52ₙ), lorsqu'une transmission des blocs de données chiffrées (35₁ à 35ₙ) présente plus d'erreurs de transmission.

8. Unité d'authentification et de chiffrement selon l'une quelconque des revendications précédentes,
**caractérisée en ce**
**que** les différents étages de chiffrement (30₁ à 30ₙ) sont reliés les uns aux autres de telle manière que des blocs de données chiffrées (35₁ à 35ₙ) différents découlent également des mêmes blocs de données en clair (34₁ à 34ₙ) après le chiffrement.

9. Unité d'authentification et de chiffrement selon la revendication 8,
**caractérisée en ce**
**que** chaque étage de chiffrement (30₁ à 30ₙ) chiffre un vecteur d'initialisation (14₁ à 14ₙ) différent au moyen d'une même clé (32) et combine les blocs de données en clair (34₁ à 34ₙ) respectifs au vecteur d'initialisation (14₁ à 14ₙ) chiffré au moyen d'une logique combinatoire OU exclusif (36₁ à 36ₙ), afin de produire à partir de cela les blocs de données chiffrées (35₁ à 35ₙ).

10. Unité d'authentification et de chiffrement selon l'une quelconque des revendications précédentes,
**caractérisée en ce**
**que** des données d'authentification (13) sont multipliées dans une unité de multiplication (37) à un vecteur de champ de Galois et combinées à la sortie de l'unité de sélection (52₁) par l'intermédiaire d'une logique combinatoire OU exclusif (38₁),
dans laquelle le résultat est multiplié dans une autre unité de multiplication (37) à un autre vecteur de champ de Galois et toujours combiné à une unité de sortie (52₂ à 52ₙ) d'un étage de chiffrement (30₂ à 30ₙ) suivant par l'intermédiaire d'une autre logique combinatoire OU exclusif (38₂), et
dans laquelle la sortie de la dernière logique combinatoire OU exclusif (38ₙ) est multipliée à un vecteur de champ de Galois dans une autre unité de multiplication (37),
dans laquelle le résultat de cette unité de multiplication (37) est combiné, au moyen d'une logique combinatoire OU exclusif (39), au résultat d'une concaténation (41) d'une longueur de bits des données d'authentification (13) et d'une longueur de bits du bloc de données chiffrées (35₁ à 35ₙ),
dans laquelle le résultat de la logique combinatoire OU exclusif (39) est multiplié au vecteur de champ de Galois dans une autre unité de multiplication (37),
dans laquelle le résultat de cette unité de multiplication (37) est combiné au moyen d'une logique combinatoire OU exclusif (40) à un vecteur d'initialisation unique (14₀) chiffré, ce qui permet de calculer le total de contrôle (15₁).

11. Unité d'authentification et de déchiffrement (7), qui présente au moins un étage de déchiffrement (29₁ à 29ₙ), dans laquelle chaque étage de déchiffrement (29₁ à 29ₙ) est réalisé de manière à déchiffrer un bloc de données chiffrées (35₁ à 35ₙ) et à générer un bloc de données en clair (34₁ à 34ₙ) et dans laquelle un total de contrôle commun (15₂) est calculé au moyen de chaque bloc de données chiffrées (35₁ à 35ₙ),
**caractérisée en ce**
**qu'**une unité de sélection (52₁ à 52ₙ) permet de sélectionner à l'intérieur de chaque étage de déchiffrement (29₁ à 29ₙ) les bits de données contenus dans chaque bloc de données chiffrées (35₁ à 35ₙ) devant être utilisés pour calculer le total de contrôle commun (15₂), afin d'utiliser uniquement les données de commande contenues dans les blocs de données chiffrées (35₁ à 35ₙ) pour calculer un total de contrôle (15₂).

12. Unité d'authentification et de déchiffrement selon la revendication 11,
**caractérisée en ce**
**qu'**un total de contrôle (15₂) est calculé, lequel est comparé au total de contrôle (15₁) reçu par l'unité d'authentification et de chiffrement (6).

13. Procédé de chiffrement au moyen d'une unité d'authentification et de chiffrement (6) qui présente au moins un étage de chiffrement (30₁ à 30ₙ), comprenant les étapes suivantes :
- le chiffrement (S₁) d'un bloc de données en clair (34₁ à 34ₙ) à l'intérieur de chaque étage de chiffrement (30₁ à 30ₙ), de sorte qu'un bloc de données chiffrées (35₁ à 35ₙ) est généré, **caractérisé par**
- la sélection (S₂) dans une unité de sélection (52₁ à 52ₙ) à l'intérieur de chaque étage de chiffrement (30₁ à 30ₙ) des bits de données contenus dans chaque bloc de données chiffrées (35₁ à 35ₙ) utilisés pour calculer le total de contrôle commun (15₁) et le calcul du total de contrôle commun (15₁) par l'intermédiaire de chaque bloc de données chiffrées (35₁ à 35ₙ),
dans lequel seules les données de commande contenues dans les blocs de données chiffrées (35₁ à 35ₙ) sont utilisées pour le calcul d'un total de contrôle (15₁).

14. Procédé selon la revendication 13,
**caractérisé par**
l'étape de procédé suivante :
- la combinaison (S₃) d'un masque de bits (51₁ à 51ₙ) pouvant être choisi librement au bloc de données chiffrées de l'étage de chiffrement (30₁ à 30ₙ) par l'intermédiaire d'une logique combinatoire ET (50₁ à 50ₙ) par l'unité de sélection (52₁ à 52ₙ) à l'intérieur de chaque étage de chiffrement (30₁ à 30ₙ).

15. Procédé selon la revendication 14,
**caractérisé par**
l'étape de procédé suivante :
- l'utilisation (S₄) d'un premier état logique à un endroit du masque de bits (51₁ à 51ₙ), dès que le bit correspondant doit être utilisé à ce même endroit à l'intérieur du bloc de données chiffrées (35₁ à 35ₙ) pour calculer le total de contrôle commun (15₁) et
l'utilisation d'un deuxième état logique à un endroit du masque de bits (51₁ à 51ₙ), dès que le bit correspondant ne doit pas être utilisé à ce même endroit à l'intérieur du bloc de données chiffrées (35₁ à 35ₙ) pour calculer le total de contrôle commun (15₁).

16. Procédé selon la revendication 14 ou 15,
**caractérisé par**
l'étape de procédé suivante :
- le réglage (S₅) des masques de bits (51₁ à 51ₙ) dans l'unité de sélection (52₁ à 52ₙ) de chaque étage de chiffrement (30₁ à 30ₙ) arbitrairement et indépendamment les uns des autres.

17. Procédé selon l'une quelconque des revendications 13 à 16,
**caractérisé par**
l'étape de procédé suivante :
- l'exclusion (S₆) des bits de données qui comportent déjà une protection d'intégrité ou ne nécessitent aucune protection d'intégrité du calcul du total de contrôle commun (15₁) à l'intérieur du bloc de données chiffrées (35₁ à 35ₙ) par l'unité de sélection (52₁ à 52ₙ).

18. Procédé selon l'une quelconque des revendications 13 à 17,
**caractérisé en ce**
**que** l'unité d'authentification et de chiffrement (6) fonctionne selon le principe du mode Galois/compteur.

19. Procédé selon l'une quelconque des revendications 13 à 18,
**caractérisé par**
l'étape de procédé suivante :
- la sélection (S₇) de plus de bits de données contenus dans le bloc de données chiffrées (35₁ à 35ₙ) pour calculer le total de contrôle (15₁) par l'unité de sélection (52₁ à 52ₙ), lorsqu'une transmission des blocs de données chiffrées (35₁ à 35ₙ) présente moins d'erreurs de transmission, et/ou
la sélection de moins de bits de données contenus dans le bloc de données chiffrées (35₁ à 35ₙ) pour calculer le total de contrôle (15₁) par l'unité de sélection (52₁ à 52ₙ), lorsqu'une transmission des blocs de données chiffrées (35₁ à 35ₙ) présente plus d'erreurs de transmission.

20. Procédé selon l'une quelconque des revendications 13 à 19,
**caractérisé en ce**
**que** les différents étages de chiffrement (30₁ à 30ₙ) sont reliés les uns aux autres au cours du procédé, de telle manière que des blocs de données chiffrées (35₁ à 35ₙ) différents découlent également des mêmes blocs de données en clair (34₁ à 34ₙ) après le chiffrement.

21. Procédé selon la revendication 20,
**caractérisé par**
l'étape de procédé suivante :
- le chiffrement d'un vecteur d'initialisation (14₁ à 14ₙ) différent par chaque étage de chiffrement (30₁ à 30ₙ) au moyen des mêmes clés (32) et
la combinaison des blocs de données en clair (34₁ à 34ₙ) respectifs au vecteur d'initialisation (14₁ à 14ₙ) chiffré au moyen d'une logique combinatoire OU exclusif, afin de générer à partir de cela les blocs de données chiffrées (35₁ à 35ₙ).

22. Procédé selon l'une quelconque des revendications 13 à 21,
**caractérisé par**
les étapes de procédé suivantes :
- la multiplication de données d'authentification (13) dans une unité de multiplication (37) à un vecteur de champ de Galois et
la combinaison de celles-ci à la sortie de l'unité de sélection (52₁) par l'intermédiaire d'une logique combinatoire OU exclusif (38₁) et
la multiplication du résultat dans une autre unité de multiplication (37) à un autre vecteur de champ de Galois ;
- la répétition de l'étape de procédé précédente jusqu'à ce qu'une combinaison à la sortie de l'unité de sélection (52ₙ) du dernier étage de chiffrement (30ₙ) ait été établie au moyen d'une logique combinatoire OU exclusif (38ₙ) et
la multiplication du résultat à un vecteur de champ de Galois dans une autre unité de multiplication (37) ;
- la combinaison du résultat de cette unité de multiplication (37), au moyen d'une logique combinatoire OU exclusif (39), au résultat d'une concaténation (41) d'une longueur de bits des données d'authentification (13) et d'une longueur de bits du bloc de données chiffrées (35₁ à 35ₙ) et
la multiplication du résultat de la logique combinatoire OU exclusif (39) au vecteur de champ de Galois dans une autre unité de multiplication (37) ; et
- la combinaison du résultat de cette unité de multiplication (37), au moyen d'une logique combinatoire OU exclusif (40), à un vecteur d'initialisation unique (14₀) chiffré, ce qui permet de calculer le total de contrôle (15₁).

23. Procédé de déchiffrement au moyen d'une unité d'authentification et de déchiffrement (7) qui présente au moins un étage de chiffrement (29₁ à 29ₙ), comprenant les étapes de procédé suivantes :
- le déchiffrement (S₈) d'un bloc de données chiffrées (35₁ à 35ₙ) à l'intérieur de chaque étage de déchiffrement (29₁ à 29ₙ), de sorte qu'un bloc de données en clair (34₁ à 34ₙ) est généré,
**caractérisé par**
- la sélection (S₉) dans une unité de sélection (52₁ à 52ₙ) à l'intérieur de chaque étage de déchiffrement (29₁ à 29ₙ) des bits de données contenus dans chaque bloc de données chiffrées (35₁ à 35ₙ) utilisés pour calculer le total de contrôle commun (15₁), et le calcul du total de contrôle commun (15₂) par l'intermédiaire de chaque bloc de données chiffrées (35₁ à 35ₙ), dans lequel seules les données de commande contenues dans les blocs de données chiffrées (35₁ à 35ₙ) sont utilisées pour le calcul d'un total de contrôle (15₂).

24. Procédé selon la revendication 23,
**caractérisé par**
l'étape de procédé suivante :
- le calcul d'un total de contrôle (15₂), qui est comparé au total de contrôle (15₁) reçu par l'unité d'authentification et de chiffrement (6).

25. Programme informatique comprenant des moyens formant code de programme, afin de pouvoir mettre en oeuvre toutes les étapes selon l'une quelconque des revendications 13 à 22 et/ou 23 à 24, lorsque le programme est exécuté sur un ordinateur ou un processeur de signal numérique ou d'autres unités de calcul électroniques.

26. Produit-programme informatique comprenant des moyens formant code de programme mis en mémoire en particulier sur un support lisible par une machine, afin de pouvoir mettre en oeuvre toutes les étapes selon l'une quelconque des revendications 13 à 22 et/ou 23 à 24, lorsque le programme est exécuté sur un ordinateur ou un processeur de signal numérique ou d'autres unités de calcul électroniques.
